# EUROPÄISCHE PATENTSCHRIFT

(11) **EP 2 692 243 B1**
(45) Veröffentlichungstag und Bekanntmachung des Hinweises auf die Patenterteilung: **26.06.2019**
(21) Anmeldenummer: 13168989.5
(22) Anmeldetag: 23.05.2013
(51) Int. Cl.: A23C 9/152, A23C 9/154, A23L 2/39, A23L 2/60, A23F 3/16, A23F 3/40, A23F 5/24, A23F 5/40, A23G 1/40, A23G 3/42, A23G 9/34, A23L 27/30, A23L 21/10, A23P 20/25, A23P 10/40, A23P 10/20, A23F 3/30, A23C 9/13, A21D 2/36, A21D 2/18, A21D 13/062

(54) **Zusammensetzung für die retardierte Resorption**
Composition for delayed resorption
Composition pour la résorption retardée

(30) Priorität: 03.08.2012 DE 102012015196; 11.09.2012 DE 102012017884
(43) Veröffentlichungstag der Anmeldung: 05.02.2014
(73) Patentinhaber: Krüger GmbH & Co. KG, 51469 Bergisch-Gladbach (DE)
(72) Erfinder: Krüger, Willibert, 51467 Bergisch Gladbach (DE)
(74) Vertreter: Strehlke, Ingo Kurt

(56) Entgegenhaltungen:
- EP-A1- 1 629 730
- EP-A2- 0 319 984
- WO-A1-00/45652
- WO-A1-02/071857
- WO-A1-2005/117608
- WO-A1-2007/041817
- WO-A1-2012/092255
- WO-A2-2005/089483
- WO-A2-2010/094837
- DE-U1-202008 016 753
- DE-U1-202010 009 591
- US-A1- 2003 082 286
- US-A1- 2007 082 104
- US-A1- 2007 105 816
- US-A1- 2008 261 897
- FOSTER-POWELL K ET AL: "International table of glycemic index and glycemic load values: 2002", THE AMERICAN JOURNAL OF CLINICAL NUTRITION, AMERICAN SOCIETY FOR NUTRITION, US, Bd. 76, Nr. 1, 1. Juli 2002 (2002-07-01), Seiten 5-56, XP002369785, ISSN: 0002-9165

## Beschreibung

Die vorliegende Erfindung betrifft das Gebiet der Lebensmitteltechnologie, insbesondere Zusammensetzungen zum Süßen und/oder Aromatisieren von Lebensmitteln.

Insbesondere betrifft die vorliegende Erfindung Zusammensetzungen mit verringertem glykämischem Index (GI) bzw. mit verringertem bzw. verzögertem Anstieg des Blutzuckerspiegels bei deren Anwendung. Darüber hinaus betrifft die vorliegende Erfindung Verwendungen der erfindungsgemäßen Zusammensetzung sowie Verfahren zu deren Herstellung.

Gesunde und kalorienbewusste Ernährung kommt in der Gesellschaft und in der Gesundheitspolitik eine immer stärkere Bedeutung zu, insbesondere vor dem Hintergrund, dass ein stetig größer werdender Anteil der Bevölkerung in den Industrienationen an Übergewicht, Erkrankungen des Herz- und Kreislaufsystems sowie klassischen Volkskrankheiten, wie Diabetes mellitus Typ II, leidet. Diese nachteilige gesundheitsspezifische Entwicklung in der Gesellschaft ist vorwiegend auch auf eine ungesunde Ernährungsweise, insbesondere den häufigen Konsum von Lebensmitteln mit hohem Fett- und Kohlenhydrat-, insbesondere Kristallzuckergehalt, zurückzuführen, wobei diese Entwicklung durch einen gleichzeitigen Bewegungsmangel noch verstärkt wird.

Besonders problematisch ist in ernährungsphysiologischer Hinsicht, dass im Rahmen der Ernährung häufig auf industriell gefertigte Lebensmittelprodukte zurückgegriffen wird, und zwar insofern, als diese im Allgemeinen einen mitunter bedenklich hohen Anteil an Zuckern, insbesondere Kristallzucker bzw. Saccharose, aufweisen. Zu derartigen Produkten gehören beispielsweise aromatisierte Getränke, insbesondere auch solche auf Basis von (kristall-)zuckerhaltigen Instant-Getränkezusammensetzungen, aromatisierte bzw. gesüßte Milchprodukte wie Fruchtjoghurt, klassische "Snacks", beispielsweise Schokoriegel und Schokolade, sowie Brotaufstriche wie Marmeladen oder Schokoladen- bzw. Nougatcremes. Aber auch vermeintlich gesunde Produkte wie industriell gefertigte Salatsoßen oder Suppen, enthalten oftmals große Mengen an Zucker, insbesondere Kristallzucker bzw. Saccharose, ohne dass dies dem Verbraucher überhaupt bewusst ist.

Verdauliche Kohlenhydrate in Form von Mehrfachzuckern, wie Poly- oder Disacchariden, zu denen auch Saccharose bzw. Kristallzucker gehört, werden im Allgemeinen nach ihrer Aufnahme über die Nahrung im Rahmen von Verdauungsprozessen enzymatisch in die ihnen zugrundeliegenden Monomere gespalten. Anschließend erfolgt gegebenenfalls noch eine weitere enzymatische Umwandlung der Monomere in Glucose, welche als Blutzucker resorbiert wird und zu einem Anstieg des Blutzuckerspiegels führt. Bei Einfachzuckern bzw. Monosacchariden verhält es sich im Allgemeinen so, dass diese ohne vorangehende enzymatische Spaltung unmittelbar vom Körper aufgenommen werden können.

Der Einfluss verschiedener Kohlenhydrate auf den Blutzuckerspiegel ist dabei variabel und hängt insbesondere davon ab, wie lange die Bereitstellung von Glucose - also Blutzucker - ausgehend von dem mit der Nahrung aufgenommenen Kohlenhydrat dauert. Üblicherweise führen langkettige und komplexe Kohlenhydrate zu einem langsameren Anstieg des Blutzuckerspiegels als kurzkettige Saccharide, insbesondere Mono- oder Disaccharide, wie beispielsweise Saccharose.

Zur Bestimmung der Wirkung eines kohlenhydrathaltigen Lebensmittels bzw. eines Kohlenhydrats als solchem auf den Blutzuckerspiegel wird als wissenschaftliches Maß der glykämische Index (GI) herangezogen. Je höher der glykämische Index (GI) eines Kohlenhydrats bzw. eines kohlenhydrathaltigen Lebensmittels ist, desto schneller steigt auch der Blutzuckerspiegel nach Aufnahme bzw. Verzehr des betreffenden Lebensmittels bzw. Kohlenhydrats an. Als Referenzwert wird bei der Bestimmung des glykämischen Index Glucose herangezogen, welche einen glykämischen Index (GI) von 100 aufweist.

Der häufige und darüber hinaus oftmals versteckte Konsum von Zucker, insbesondere Kristallzucker bzw. Saccharose, über die Nahrung ist jedoch in ernährungsphysiologischer, insbesondere stoffwechselphysiologischer Hinsicht problematisch:

Zucker mit hohem glykämischem Index, zu denen insbesondere auch als Disaccharid vorliegender Kristallzucker bzw. Saccharose gehört, werden durch im Rahmen von Verdauungsprozessen erfolgende Stoffwechselschritte äußerst schnell in ihre Monomere gespalten, in Blutzucker überführt und resorbiert, so dass es bereits unmittelbar nach der Nahrungsaufnahme zu einem starken und rapiden Anstieg des Blutzuckerspiegels kommt, so dass auch Kristallzucker bzw. Saccharose einen relativ hohen glykämischen Index (GI) aufweist, welcher nämlich bei einem Wert von 70 liegt.

Ein schneller Anstieg des Blutzuckerspiegels wiederum führt zu einer schnellen Insulinantwort des Körpers, d. h. es werden große Mengen an Insulin aus der Bauchspeicheldrüse ausgeschüttet, um den Blutzuckerspiegel wieder zu senken bzw. um den Blutzucker schnell in die Speicherform Glykogen zu überführen. Problematisch hierbei ist, dass der geringe Blutzuckerspiegel als "Hungeranzeiger" ein erneutes Hungergefühl auslöst, obwohl seit der letzten Nahrungsaufnahme nicht viel Zeit vergangen ist und prinzipiell eine ausreichende Kalorien- bzw. Energiemenge aufgenommen wurde. Das Auslösen von Hungergefühlen bis hin zu Heißhunger führt üblicherweise zur erneuten Nahrungsaufnahme, was oftmals in einer über den Tagesbedarf hinausgehenden Energiezufuhr resultiert und folglich zu einer Gewichtszunahme führt.

Neben Übergewicht kann die häufige und übermäßige Ausschüttung großer Insulinmengen, welche durch den Verzehr von Lebensmitteln mit großem Anteil an Kohlenhydraten mit hohem glykämischen Index, insbesondere Kristallzucker, hervorgerufen werden kann, langfristig sogar eine Herabregulation der Insulinrezeptoren in den Zellen begünstigen, was im medizinischen Sprachgebrauch als Insulinresistenz bezeichnet wird. Die Folge einer solchen Insulinresistenz ist ein chronisch erhöhter Blutzuckerspiegel, welcher sich langfristig im Krankheitsbild der Diabetes mellitus Typ II manifestiert. Diabetes mellitus Typ II ist in der Bevölkerung der Industrienationen weit verbreitet und wird zu den sogenannten "Wohlstandserkrankungen" gezählt. Allein in Deutschland sind nach Angaben des Deutschen Diabetes-Zentrums bereits mehr als 5 Millionen Menschen von Diabetes mellitus Typ II betroffen, wobei aufgrund der hohen Anzahl an unentdeckten bzw. bislang nicht diagnostizierten Erkrankungen tatsächlich von 7 bis 8 Millionen Betroffenen ausgegangen wird.

Wie nachfolgend noch angeführt, stellt der glykämische Index einer Zusammensetzung bzw. eines Lebensmittels ein Maß zur Bestimmung der Wirkung auf den Blutzuckerspiegel dar, wobei diesbezüglich Glucose bzw. Traubenzucker mit einem Wert von 100 einen hohen glykämischen Index aufweist, was gleichermaßen für Saccharose bzw. Kristallzucker gilt, welcher nämlich einen glykämischen Index mit einem Wert von 70 besitzt.

Aus den obigen Ausführungen wird deutlich, dass Lebensmittel mit hohem Zuckergehalt, insbesondere Zucker, welche einen schnellen Anstieg des Blutzuckerspiegels bewirken bzw. einen hohen glykämischen Index besitzen, ernährungsphysiologisch zumindest als problematisch bzw. nicht unbedenklich anzusehen sind, insbesondere wenn weitere Risikofaktoren hinzukommen, wie z. B. Bewegungsmangel.

Im Stand der Technik sind bereits Versuche unternommen worden, Lebensmittel, insbesondere süße bzw. aromatisierte Lebensmittel, in Bezug auf ernährungs- bzw. stoffwechselphysiologische Aspekte zu optimieren. Die diesbezüglichen Maßnahmen sind jedoch im Allgemeinen nicht zufriedenstellend bzw. weisen signifikante Nachteile auf.

So wird im Stand der Technik zum Süßen von Lebensmitteln der hierfür eingesetzte (Kristall-)Zucker vollständig oder zumindest teilweise durch sogenannte Süßstoffe, insbesondere synthetische Süßstoffe, ersetzt. So betreffen die WO 99/32000 A1 sowie die dazugehörende EP 1 042 964 A1 bzw. US 6 399 132 B1 beispielsweise eine Süßstoffzusammensetzung auf Basis der Süßstoffe Acesulfam K und Aspartam. Derartige Süßstoffe bzw. Süßstoffzusammensetzungen besitzen eine 20fach bis 200fach erhöhte Süßkraft im Vergleich zu Saccharose bzw. Haushaltszucker, was mitunter in einer unerwünschten Übersüßung der Lebensmittel resultiert. Weiterhin besitzen Süßstoffe oftmals eine nicht natürlich schmeckende Süße bzw. einen unerwünschten Beigeschmack. Zudem wirken zahlreiche Süßstoffe bei Verzehr in größeren Mengen abführend, und durch die künstliche Süße ohne entsprechende Kohlenhydratzufuhr kann mitunter ein übermäßiges Hungergefühl hervorgerufen werden.

Zudem werden im Stand der Technik häufig auch sogenannte Zuckerersatz- bzw. Zuckeraustauschstoffe zum vollständigen Ersatz von (Kristall-)Zucker verwendet, was ebenfalls mit Nachteilen verbunden sein kann. Zwar weisen Zuckeraustauschstoffe eine dem Haushaltszucker verhältnismäßig ähnliche Süßkraft auf und können in äquivalenten Mengen eingesetzt werden, jedoch lässt sich auch mit Zuckeraustauschstoffen üblicherweise kein natürlicher Süßgeschmack erzeugen. Darüber hinaus sind auch Zuckeraustauschstoffe in sehr hohen Mengen oftmals ernährungsphysiologisch bedenklich, da sie - ebenfalls wie Süßstoffe - eine abführende Wirkung besitzen können. Somit hat sich auch der Einsatz von Zuckerersatz- bzw. Zuckeraustauschstoffen im Hinblick auf ernährungsphysiologische und organoleptische Aspekte nicht immer als optimal herausgestellt.

Die WO 2005/117608 A1 betrifft Extrakte, insbesondere nicht-nährende sekundäre Pflanzenstoffe, welche aus Zuckerrohr- oder Zuckerrüben-Abfallprodukten, wie Melasse, Zuckerschlamm und Bagasse, gewonnen sind und den glykämischen Index senkende Eigenschaften besitzen, sowie deren Verwendung als Süßstoffe und in Nahrungsmitteln mit Zucker.

Weiterhin betrifft die WO 2010/094837 A2 ein Produkt, welches Saccharose und eine polyphenolische Komponente enthält sowie die Verwendung von polyphenolischen Komponenten zur Kontrolle des postprandialen Blutzuckerwerts bzw. der Insulinkonzentration.

Die US 2008/0261897 A1 betrifft zudem Zusammensetzungen, welche Isomaltulose und eine polyphenolhaltige Zusammensetzung enthalten, die Verwendung dieser Zusammensetzungen und die Verwendung von Isomaltulose zur Maskierung unerwünschter Geschmäcker, insbesondere bitterer Substanzen, in teeextrakthaltigen Formulierungen.

Weiterhin betrifft die WO 2005/089483 A2 Lebensmittelprodukte sowie Verfahren zur Herstellung von Lebensmittelprodukten, wobei die betreffenden Lebensmittelprodukte Süßstoffe mit verringertem glykämischem Index aufweisen.

Die WO 2007/041817 A1 betrifft Lebensmittelzusammensetzungen, welche Zucker und ein Biopolymer enthalten und dabei einen reduzierten glykämischen Index aufweisen.

Gemäß der US 2007/0105816 A1 soll der glykämische Index durch eine Süßstoffzusammensetzung auf Basis von 5 bis 20 Gew.-% Inulin bzw. Fructose-Oligosacchariden, 2 bis 15 Gew.-% gelbildender Ballaststoffe, 0,5 Gew.-% Cellulose und 60 bis 92,5 Gew.-% Mono- bzw. Disacchariden gesenkt werden.

Die US 2003/0082286 A1 betrifft zudem ein Süßmittel auf Basis von Fructose und Lactose, welches einen reduzierten Kaloriengehalt aufweisen soll.

Weiterhin betrifft die EP 0 319 984 A2 betrifft ein Süßmittel, welches einen synthetischen Süßstoff einerseits sowie eine Fruchtzubereitung andererseits aufweist.

Schließlich betrifft die EP 1 629 730 A1 eine Lebensmittelkomponente, welche Zucker bzw. Saccharose in einem Gewichtsverhältnis bzw. in einem Volumenverhältnis von 1 : 1 in zuckerhaltigen Lebensmitteln ersetzen soll, um eine Kalorienreduktion des resultierenden Lebensmittels zu erzielen.

Insgesamt besteht im Stand der Technik somit ein Bedarf, Lebensmittel unter Erzielung hervorragender organoleptischer Eigenschaften, insbesondere eines natürlichen Süßegeschmacks, und verbesserter ernährungsphysiologischer Eigenschaften, insbesondere im Hinblick auf den Blutzuckerspiegel bzw. die Insulinausschüttung, süßen bzw. aromatisieren zu können.

Die Aufgabe der vorliegenden Erfindung besteht somit darin, eine Zusammensetzung bereitzustellen, welche sich zum Süßen bzw. Aromatisieren von Lebensmitteln eignet und welche die zuvor geschilderten Nachteile des Standes der Technik zumindest im Wesentlichen vermeidet oder aber zumindest verringert bzw. abschwächt.

Insbesondere besteht die Aufgabe der vorliegenden Erfindung darin, eine Zusammensetzung bereitzustellen, welche gegenüber dem Stand der Technik in ernährungsphysiologischer Hinsicht verbessert ist und nach dem Verzehr im Vergleich zu Zusammensetzungen, welche (Kristall-)Zucker in vergleichbaren Mengen aufweisen, einen verringerten bzw. retardierten Anstieg des Blutzuckerspiegels bzw. eine verlangsamte Kohlenhydrataufnahme bewirkt, insbesondere einen niedrigen glykämischen Index (GI) besitzt.

Zur Lösung der zuvor geschilderten Aufgabe schlägt die vorliegende Erfindung somit eine Zusammensetzung nach Anspruch 1 vor; weitere vorteilhafte Ausgestaltungen sind Gegenstand der diesbezüglichen Unteransprüche.

Weiterer Gegenstand der vorliegenden Erfindung sind die erfindungsgemäßen Verwendungen der Zusammensetzung nach der vorliegenden Erfindung gemäß den diesbezüglichen Verwendungsansprüchen; weitere vorteilhafte Ausgestaltungen sind Gegenstand der diesbezüglichen Unteransprüche.

Darüber hinaus sind Gegenstand der vorliegenden Erfindung die erfindungsgemäßen Verfahren zur Herstellung der Zusammensetzung nach der Erfindung gemäß den diesbezüglichen Verfahrensansprüchen.

Es versteht sich von selbst, dass besondere Ausgestaltungen und Ausführungsformen, welche nur im Zusammenhang mit einem Erfindungsaspekt beschrieben sind, auch in Bezug auf die anderen Erfindungsaspekte entsprechend gelten, ohne dass dies ausdrücklich beschrieben ist.

Bei allen nachstehend genannten relativen bzw. prozentualen gewichtsbezogenen Mengenangaben ist zu beachten, dass diese im Rahmen der erfindungsgemäßen Zusammensetzung vom Fachmann derart auszuwählen sind, dass sie sich in der Summe - gegebenenfalls unter Einbeziehung optionaler weiterer Komponenten bzw. Inhaltsstoffe bzw. Zusatzstoffe bzw. Bestandteile, insbesondere wie nachfolgend definiert - stets zu 100 % bzw. 100 Gew.-% ergänzen. Dies versteht sich für den Fachmann aber von selbst. Im Übrigen gilt, dass der Fachmann anwendungsbezogen oder einzelfallbedingt von den nachfolgend aufgeführten Mengenangaben abweichen kann.

Gegenstand der vorliegenden Erfindung ist somit - gemäß einem **ersten** Aspekt der vorliegenden Erfindung - eine Zusammensetzung zum Süßen und/oder Aromatisieren eines Lebensmittels,
wobei die Zusammensetzung (i) in Form eines Granulats und/oder Pulvers und/oder in Form von Agglomeraten oder (ii) in Form von Kompaktaten vorliegt und
wobei die Zusammensetzung
(a) Saccharose in einer Menge im Bereich von 20 Gew.-% bis 90 Gew.-%, bezogen auf die Zusammensetzung, und
(b) mindestens eine den glykämischen Index der Zusammensetzung verringernde Substanz (GIVS), ausgewählt aus Lactose und Isomaltulose, in einer Menge im Bereich von 2 Gew.-% bis 60 Gew.-%, bezogen auf die Zusammensetzung, und mindestens eine den glykämischen Index der Zusammensetzung verringernde Substanz (GIVS), ausgewählt aus Pflanzenextrakten auf Basis von Äpfeln, Birnen, Trauben, Tomaten und/oder Möhren, in einer Menge im Bereich von 0,5 Gew.-% bis 10 Gew.-%, bezogen auf die Zusammensetzung,
aufweist,
wobei die Pflanzenextrakte auf Basis von Äpfeln, Birnen, Trauben, Tomaten und/oder Möhren unverdauliche Kohlenhydrate, pflanzenbasierte Schleimstoffe, Cellulosederivate und phenolische Verbindungen enthalten, und
wobei die Zusammensetzung einen glykämischen Index (GI) im Bereich von 30 bis 55, bezogen auf Glucose als Referenzwert, aufweist.

Denn die Anmelderin hat in völlig überraschender Weise gefunden, dass die zuvor geschilderten Nachteile des Standes der Technik durch die Bereitstellung einer Zusammensetzung auf Basis von Saccharose in spezieller Kombination mit einer den glykämischen Index der Zusammensetzung verringernden Substanz überwunden werden können. Die erfindungsgemäße Zusammensetzung führt im Rahmen der Süßung bzw. Aromatisierung von Lebensmitteln oder bei Einsatz bzw. Anwendung als Instant-(Getränke-)Zusammensetzung im Vergleich zum Stand der Technik, insbesondere im Vergleich zu Zusammensetzungen mit vergleichbarem Saccharose-Gehalt, bei hervorragenden organoleptischen Eigenschaften, insbesondere verbunden mit einem natürlichen Süßegeschmack, zu einer verlangsamten Aufnahme an Kohlenhydraten bzw. zu einem verlangsamten bzw. geringeren Anstieg des Blutzuckerspiegels, so dass folglich auch eine ernährungsphysiologisch ungünstige Ausschüttung von großen Insulinmengen ausbleibt.

Wie zuvor bereits ausgeführt, ist die erfindungsgemäße Zusammensetzung in ernährungsphysiologischer Hinsicht Zusammensetzungen zum Süßen bzw. Aromatisieren von Lebensmitteln sowie Instant-(Getränke-)Zusammensetzungen des Standes der Technik überlegen, da sie bei gleichzeitig natürlichem Süßegeschmack einen geringeren Anstieg des Blutzuckerspiegels bewirkt und eine starke Insulinantwort der Bauchspeicheldrüse nach Verzehr der Zusammensetzung vermieden wird. Üblicherweise wurde diesem Problem im Stand der Technik entgegengetreten, indem Saccharose durch Zuckeraustauschstoffe oder Süßstoffe ersetzt wurde, was allerdings oftmals mit schlechteren geschmacklichen Eigenschaften verbunden ist. Überraschenderweise ist es im Rahmen der vorliegenden Erfindung gelungen, dennoch hervorragende organoleptische Eigenschaften, insbesondere eine natürlich schmeckende Süße, zu realisieren.

Im Gegensatz zu Zusammensetzungen des Standes der Technik, welche zuckerfrei ausgebildet sind, ist es im Rahmen der vorliegenden Erfindung bei Verzehr der erfindungsgemäßen Zusammensetzung gewährleistet, dass der Körper mit Kohlenhydraten versorgt wird, wobei die diesbezüglich verlangsamte bzw. retardierte Aufnahme bzw. Resorption nachhaltig zu einer Verringerung des Hungergefühls führt.

Dass es möglich ist, eine Zusammensetzung, insbesondere zum Süßen bzw. Aromatisieren eines Lebensmittels oder als Instant-(Getränke-)Zusammensetzung, bereitzustellen, welche einen geringen glykämischen Index bei gleichzeitig hervorragenden organoleptischen Eigenschaften aufweist, war so nicht vorhersehbar und bedurfte einer langjährigen Forschungsarbeit seitens der Anmelderin.

Im Rahmen des Verzehrs der erfindungsgemäßen Zusammensetzung bewirkt die den glykämischen Index der Zusammensetzung verringernde Substanz (GIVS), dass die Verstoffwechselung der Saccharose - ohne sich auf diese Theorie beschränken zu wollen - auf mehreren Ebenen retardiert bzw. beeinflusst wird, so dass ein schneller Anstieg des Blutzuckerspiegels ausbleibt, wie er beim alleinigen Einsatz von Saccharose eintritt. Hierauf wird nachfolgend noch im Detail eingegangen.

Die erfindungsgemäße Zusammensetzung eignet sich somit für eine gesunde Ernährung, insbesondere vor dem Hintergrund, eine Gewichtszunahme bzw. ein Übergewicht zu vermeiden. Insbesondere eignet sich die erfindungsgemäße Zusammensetzung auch für Diabetiker, da ein schneller Anstieg des Blutzuckerspiegels, welcher wiederum die Ausschüttung großer Mengen von Insulin erfordert, nicht auftritt.

Darüber hinaus besitzt die erfindungsgemäße Zusammensetzung, wie zuvor angeführt, einen natürlichen Süßgeschmack, entsprechend dem von Kristallzucker bzw. Saccharose. Auch ist es möglich, die Zusammensetzung mit weiteren Aromen zu versehen, wie beispielsweise natürlichen Fruchtaromen, um die erfindungsgemäße Zusammensetzung beispielsweise als Instant-(Getränke-)Zusammensetzung einzusetzen.

Weiterhin zeichnet sich die erfindungsgemäße Zusammensetzung durch eine optimale Dosierbarkeit aus, insbesondere da die Süßkraft der erfindungsgemäßen Zusammensetzung etwa der von Haushaltszucker entspricht. Überdosierungen bzw. Fehldosierungen, welche schnell zur Übersüßung führen, wie es im Stand der Technik insbesondere bei Einsatz von Süßstoffen häufig der Fall ist, werden im Rahmen der vorliegenden Erfindung vermieden.

Darüber hinaus ist die erfindungsgemäße Zusammensetzung sozusagen universell einsetzbar. So kann es beispielsweise vorgesehen sein, die erfindungsgemäße Zusammensetzung zum Süßen von insbesondere industriell gefertigten Produkten bzw. Lebensmitteln, wie Süßigkeiten, beispielsweise in Form von Schokoriegeln oder Schokolade, Brotaufstrichen oder aromatisierten Milchprodukten wie beispielsweise Fruchtjoghurt zu verwenden. Gleichermaßen ist es möglich, die erfindungsgemäße Zusammensetzung im Haushaltsbereich zu verwenden, beispielsweise nach Art einer Streu- oder Tafelsüße, insbesondere zum Süßen von Getränken wie Kaffee. Darüber hinaus kann die erfindungsgemäße Zusammensetzung auch als Instant-(Getränke-)Zusammensetzung verwendet werden.

Die erfindungsgemäße Zusammensetzung kann dabei in vielfältiger Weise ausgestaltet sein. Bevorzugte Ausführungsformen sowie im Rahmen der vorliegenden Erfindung verwendete Begrifflichkeiten sind daher im Folgenden detailliert erläutert.

Der im Rahmen der vorliegenden Erfindung verwendete Begriff "Zusammensetzung" ist breit zu verstehen, d. h. er umfasst in nichtbeschränkender Weise auch Süßmittelzusammensetzungen als solche, welche einem insbesondere industriell gefertigten Produkt oder Lebensmittel beigefügt werden, um diesem einen süßen Geschmack zu verleihen. Darüber hinaus können im Rahmen der vorliegenden Erfindung unter dem Begriff "Zusammensetzung" auch Instant-(Getränke-)Zusammensetzungen verstanden werden, aus welchen durch Aufbereiten mit verzehrbaren Flüssigkeiten Getränke bzw. anderweitige Nahrungsmittel hergestellt werden können. Darüber hinaus kann unter dem Begriff "Zusammensetzung" auch eine für den Hausgebrauch vorgesehene Streu- oder Tafelsüße verstanden werden.

Unter einem "Lebensmittel" werden im Rahmen der vorliegenden Erfindung Grundnahrungsmittel bzw. Nahrungsmittel wie beispielsweise Brot, sowie sogenannte Genussmittel wie Kaffee, Tee, Kakao oder Süßwaren, insbesondere Schokolade, verstanden.

Was den Begriff "glykämischer Index" (glykämischer Index, GI), wie er im Rahmen der vorliegenden Erfindung verwendet wird, anbelangt, so stellt dieser ein Maß für die blutzuckersteigernde Wirkung von zum Verzehr geeigneten Substanzen bzw. Zusammensetzungen bzw. Lebensmitteln dar. Dabei wird die blutzuckersteigernde Wirkung von Glucose bzw. Traubenzucker als Referenzwert zur Beurteilung des glykämischen Index (GI) der Zusammensetzung herangezogen, wobei diesbezüglich für Glucose der glykämische Index (GI) auf einen (Referenz-)Wert von 100 festgelegt wird. In diesem Zusammenhang weist Saccharose bzw. Kristallzucker, wie zuvor angeführt, einen glykämischen Index von 70 auf, wobei auch dieser Wert ernährungsphysiologisch noch als unvorteilhaft eingestuft wird.

Im Allgemeinen kann der glykämische Index (GI) einer Zusammensetzung bzw. eines Lebensmittels und somit auch der erfindungsgemäßen Zusammensetzung ermittelt bzw. bestimmt werden, indem der zeitliche Verlauf des Blutzuckerspiegels für einen definierten Zeitraum nach dem Verzehr einer definierten Menge der zu testenden Zusammensetzung bzw. des zu testenden Lebensmittels mit dem zeitlichen Verlauf des Blutzuckerspiegels nach dem Verzehr einer korrespondierenden Menge Glucose bzw. Traubenzucker verglichen wird. Dabei weist die zu testende Zusammensetzung bzw. das zu testende Lebensmittel eine der verzehrten Glucose entsprechende Kohlenhydratmenge auf, wobei insbesondere der zeitliche Verlauf des jeweiligen Blutzuckerspiegels für einen Zeitraum zwei Stunden nach dem Verzehr von Glucose einerseits und der zu testenden Zusammensetzung bzw. dem zu testenden Lebensmittel andererseits herangezogen werden kann. Zur Ermittlung des glykämischen Index (GI) der zu testenden Zusammensetzung bzw. des zu testenden Lebensmittels wird dann der Quotient der Flächen unter den jeweiligen Linien der Blutzuckerwerte bzw. der Quotient der jeweiligen Integrale herangezogen. Der so ermittelte Quotient wird anschließend zum Erhalt des glykämischen Index (GI) noch mit dem Faktor 100 multipliziert.

Mit anderen Worten wird zur Bestimmung des glykämischen Index (GI) die blutzuckersteigernde Wirkung von Glucose bzw. Traubenzucker als Referenz herangezogen. Dabei wird von einer Testperson so viel Glucose bzw. so viel der zu testenden Zusammensetzung bzw. des zu testenden Lebensmittels aufgenommen, dass jeweils identische Kohlenhydratmengen in den jeweiligen Portionen enthalten sind (beispielsweise beinhaltet die zu testende Zusammensetzung bzw. das zu testende Lebensmittel 100 g Kohlenhydrate, sofern die zu verabreichende Glucosemenge gleichermaßen 100 g beträgt). Der glykämische Index wird dann über den Quotienten der Flächen unter der Linie der jeweiligen Blutzuckerwerte für identische Zeiträume, insbesondere während der ersten zwei Stunden nach Verzehr der jeweiligen Mahlzeiten, wie zuvor angeführt, definiert.

Das diesbezügliche Vorgehen zur Bestimmung des glykämischen Index (GI) ist dem Fachmann wohlbekannt, so dass es hierzu keinen weiteren Ausführungen bedarf.

Ein auf dieser Basis erhaltener glykämischer Index (GI) von beispielsweise 50 sagt somit aus, dass der über die Zeit integrierte Blutzuckeranstieg der zu testenden Zusammensetzung bzw. des zu testenden Lebensmittels die Hälfte des Anstiegs des Blutzuckerspiegels, welcher durch eine korrelierende an Glucose hervorgerufen wird, ausmacht. Im Allgemeinen wird ein glykämischer Index (GI) von mehr als 70 ernährungsphysiologisch als nicht optimal eingestuft, während es ernährungsphysiologisch als vorteilhaft angesehen wird, vorwiegend Lebensmittel mit einem glykämischen Index von höchstens 60, insbesondere höchstens 50 zu konsumieren, um den Anstieg des Blutzuckerspiegels und die damit verbundene Ausschüttung von Insulin durch die Bauchspeicheldrüse gering zu halten.

Unter einer den glykämischen Index der Zusammensetzung verringernden Substanz ("GIVS") werden erfindungsgemäß solche Substanzen verstanden, welche die Resorption bzw. Aufnahme der erfindungsgemäß eingesetzten Saccharose in den Körper nach Verzehr der Zusammensetzung nach der Erfindung verringern bzw. retardieren können. Derartige Substanzen können - ohne sich auf die jeweils zugrundeliegende Theorie beschränken zu wollen - wie nachfolgend angeführt wirken: Einerseits können enzymatische Prozesse des Kohlenhydratstoffwechsels, wie die Spaltung von Saccharose in Glucose und Fructose sowie die Bildung von Glucose ausgehend von der in der Saccharose enthaltenen Fructose, signifikant retardiert bzw. inhibiert werden. Andererseits ist es möglich, dass die den glykämischen Index der Zusammensetzung verringernden Substanzen die Resorption von Glucose aus dem Darminhalt retardieren bzw. verzögern. Ohne sich dabei auf diese Theorie beschränken zu wollen, spielen hierfür insbesondere sogenannte Matrixeffekte eine Rolle, auf deren Basis nämlich die Kohlenhydrate, insbesondere die Glucose, gewissermaßen abgeschirmt werden und auf diese Weise die Resorption aktiv verhindert wird. Der erfindungsgemäße Einsatz von Substanzen der vorgenannten Art erlaubt somit, dass Saccharose zum Süßen bzw. Aromatisieren eingesetzt wird, um einen natürlichen Süßegeschmack zu erzielen, aber dennoch ein starker Anstieg des Blutzuckerspiegels bzw. ein hoher glykämischer Index (GI) infolge der verzögerten bzw. verringerten Aufnahme der Kohlenhydrate verhindert bzw. vermindert wird.

Wie zuvor bereits geschildert, wird üblicherweise zur Bestimmung des glykämischen Index (GI) eines Lebensmittels bzw. eines Kohlenhydrats als Referenzwert der glykämische Index von Glucose (GI = 100) eingesetzt. In diesem Zusammenhang weist reine Saccharose einen glykämischen Index (GI) von 70 auf.

Im Rahmen der vorliegenden Erfindung ist es somit üblicherweise vorgesehen, dass die Zusammensetzung einen glykämischen Index (GI) von höchstens 50, besonders bevorzugt höchstens 40, bezogen auf Glucose als Referenzwert, aufweist. Gleichermaßen ist es erfindungsgemäß vorgesehen, dass die Zusammensetzung nach der Erfindung einen glykämischen Index (GI) im Bereich von 30 bis 55, ganz besonders bevorzugt im Bereich von 30 bis 50, bezogen auf Glucose als Referenzwert, aufweist.

Gemäß einer bevorzugten Ausführungsform der Erfindung ist es vorgesehen, dass die Zusammensetzung einen im Vergleich zu Saccharose verringerten glykämischen Index (GI) aufweist, wie in den Ansprüchen spezifiziert ist.

Wie zuvor bereits beschrieben, wird somit im Rahmen der vorliegenden Erfindung gemäß Ansprüchen 10-11 ermöglicht, dass sich unter Einsatz der erfindungsgemäßen Zusammensetzung Lebensmittel süßen bzw. aromatisieren bzw. Instant-(Getränke-)-Zusammensetzungen herstellen lassen, welche im Vergleich zu üblichen Zusammensetzungen aufgrund des geringeren glykämischen Index (GI) zu einem signifikant verringerten Anstieg des Blutzuckerspiegels führen und somit in ernährungsphysiologischer Hinsicht verbessert sind.

Um eine gute Süßkraft bzw. Süßstärke zu gewährleisten, ist es im Rahmen der vorliegenden Erfindung vorgesehen, dass die Zusammensetzung die Saccharose in einer Menge im Bereich von 20 Gew.-% bis 90 Gew.-%, bevorzugt im Bereich von 20 Gew.-% bis 85 Gew.-%, besonders bevorzugt im Bereich von 20 Gew.-% bis 80 Gew.-%, bezogen auf die Zusammensetzung, aufweist. Zudem ist es erfindungsgemäß vorgesehen, dass die Zusammensetzung die Saccharose in einer Menge von höchstens 90 Gew.-%, bevorzugt höchstens 85 Gew.-%, besonders bevorzugt höchstens 80 Gew.-%, bezogen auf die Zusammensetzung, aufweist.

Erfindungsgemäß ist es vorgesehen, dass mindestens eine den glykämischen Index der Zusammensetzung verringernde Substanz (GIVS) ausgewählt ist aus Pflanzenextrakten auf Basis von Äpfeln, Birnen, Trauben, Tomaten und/oder Möhren.

Der besondere Vorteil des Einsatzes von Pflanzenextrakten, insbesondere der vorgenannten Art, ist auch darin zu sehen, dass bei Pflanzenextrakten die bereits zuvor beschriebenen Wirkmechanismen - nämlich die Ausbildung einer die Aufnahme von Kohlenhydraten retardierenden Matrix einerseits und die Inhibierung von relevanten Enzymen andererseits - in Kombination zum Tragen kommen, so dass hierdurch der glykämische Index (GI) der Zusammensetzung verringert wird. Denn Pflanzenextrakte sind einerseits reich an unverdaulichen Kohlenhydraten, insbesondere Pektinen, pflanzenbasierten Schleimstoffen sowie Cellulosederivaten. Andererseits enthalten Pflanzenextrakte darüber hinaus zahlreiche phenolische Verbindungen.

Was die eingesetzten Mengen der Pflanzenextrakte anbelangt, so können auch diese in weiten Bereichen variieren. Erfindungsgemäß ist es vorgesehen, dass die Zusammensetzung die den glykämischen Index der Zusammensetzung verringernde Substanz (GIVS) in Form von Pflanzenextrakten in einer Menge im Bereich von 0,5 Gew.-% bis 10 Gew.-%, insbesondere im Bereich von 0,5 Gew.-% bis 8 Gew.-%, vorzugsweise im Bereich von 0,5 Gew.-% bis 5 Gew.-%, bevorzugt im Bereich von 0,5 Gew.-% bis 1 Gew.-%, bezogen auf die Zusammensetzung, aufweist.

Zudem ist es im Rahmen der vorliegenden Erfindung vorgesehen, dass die Zusammensetzung mindestens eine den glykämischen Index der Zusammensetzung verringernde Substanz (GIVS), ausgewählt aus Isomaltulose und/oder Lactose, enthält. Insbesondere durch den Einsatz von Isomaltulose bzw. Lactose kann der glykämische Index der erfindungsgemäßen Zusammensetzung in besonders effektiver Weise gesenkt werden, wobei der natürliche Süßgeschmack der Zusammensetzung bewahrt wird. Insbesondere Isomaltulose wird vom menschlichen Körper äußerst langsam verstoffwechselt, was zu der deutlichen Verringerung des glykämischen Index (GI) der Zusammensetzung nach der Erfindung führt. Darüber hinaus ist Isomaltulose mit dem weiteren Vorteil verbunden, dass ihre Süße der von Zucker sehr nahe kommt, der Stoff selbst allerdings keine kariogene Wirkung besitzt, da die karieserzeugenden Bakterien der Mundflora Isomaltulose nicht zur Säurebildung verwenden können.

Was die erfindungsgemäß eingesetzten Mengen an Disacchariden mit verringertem glykämischen Index (GI) anbelangt, so können auch diese in weiten Bereichen variieren. Erfindungsgemäß ist es vorgesehen, dass die Zusammensetzung die den glykämischen Index der Zusammensetzung verringernde Substanz (GIVS), ausgewählt aus Isomaltulose und/oder Lactose, in einer Menge im Bereich von 2 Gew.-% bis 60 Gew.-%, vorzugsweise im Bereich von 5 Gew.-% bis 50 Gew.-%, bevorzugt im Bereich von 10 Gew.-% bis 40 Gew.-%, bezogen auf die Zusammensetzung, aufweist.

Um den Geschmack, insbesondere die Süße, der erfindungsgemäßen Zusammensetzung weiterführend einzustellen bzw. maßzuschneidern, kann es zudem vorgesehen sein, dass die Zusammensetzung mindestens einen Süßstoff enthält. Es ist bevorzugt, wenn der Süßstoff aus der Gruppe von Acesulfam, Cyclamat, Glycyrrhizin, Aspartam, Dulcin, Saccharin, Rebaudiosiden, vorzugsweise Steviosid, Naringin-Dihydrochalkon, Monellin, Neohesperidin-Dihydrochalkon, Thaumatin, Sucralose, Neotam und deren physiologisch annehmbaren Salzen und/oder Derivaten, ausgewählt ist. Besonders bevorzugt ist der Süßstoff aus der Gruppe von Aspartam, Acesulfam, Saccharin, Cyclamat, Steviosid und Sucralose sowie deren Mischungen ausgewählt.

In diesem Zusammenhang kann es erfindungsgemäß vorgesehen sein, dass die Zusammensetzung den Süßstoff in einer Menge im Bereich von 0,1 Gew.-% bis 50 Gew.-%, insbesondere im Bereich von 0,5 Gew.-% bis 40 Gew.-%, vorzugsweise im Bereich von 1 Gew.-% bis 30 Gew.-%, bevorzugt im Bereich von 2 Gew.-% bis 20 Gew.-%, bezogen auf die Zusammensetzung, aufweist.

Um die erfindungsgemäße Zusammensetzung im Hinblick auf ernährungsphysiologische Aspekte weitergehend zu verbessern bzw. zu modifizieren, kann es erfindungsgemäß zudem vorgesehen sein, dass die Zusammensetzung nach der Erfindung mindestens eine Substanz aus der Gruppe von physiologisch annehmbaren Antioxidantien enthält. Besonders gute Ergebnisse werden erzielt, wenn die Antioxidantien aus der Gruppe von (i) sekundären Pflanzenstoffen, insbesondere phenolischen Verbindungen, vorzugsweise einfachen Phenolen, Polyphenolen, Xanthonen, Phenylpropanoiden, Stilbenen und/oder deren Glykosiden, bevorzugt Resveratol und/oder Flavonoiden; und/oder isoprenoiden Verbindungen, vorzugsweise Terpenen, Steroiden und/oder deren Glykosiden, Carotinoiden und/oder Speicherlipiden; und/oder Alkaloiden, insbesondere Coffein und/oder Nikotin; und/oder Aminosäuren, insbesondere Alliin und/oder Canavanin; und deren Mischungen; (ii) Vitaminen, vorzugsweise Vitamin A, C und/oder E; (iii) Mineralstoffen und/oder Spurenelementen, insbesondere zink-, eisen-, kupfer-, mangan- und/oder selenhaltigen Verbindungen, ausgewählt sind.

Bei Antioxidantien handelt es sich sozusagen um Schutzstoffe nach Art von Radikalfängern für den menschlichen Körper, welche diesen vor freien Radikalen schützen. Da es sich bei freien Radikalen um chemisch äußerst reaktionsfreudige Sauerstoffverbindungen handelt, können diese die Körperzellen schädigen. Durch Antioxidantien können derartige Moleküle inaktiviert werden, insbesondere können sie eine unerwünschte Oxidation anderer Substanzen, wie beispielsweise zellulären Strukturen, gezielt verhindern.

Darüber hinaus kann es im Rahmen der vorliegenden Erfindung vorgesehen sein, dass die Zusammensetzung mindestens einen Geschmacks- und/oder Aromabildner aufweist, beispielsweise für den Fall, dass die erfindungsgemäße Zusammensetzung als Instant-(Getränke-)Zusammensetzung vorliegt bzw. eingesetzt wird. Erfindungsgemäß ist es bevorzugt, wenn der Geschmacks- und/oder Aromabildner aus der Gruppe von (i) Extrakten, insbesondere Pflanzenextrakten, Fruchtextrakten und Tee-Extrakten; (ii) Aromen und/oder Aromastoffen; (iii) Pflanzenpulvern, Fruchtpulvern und Saftpulvern und (iv) deren Mischungen ausgewählt ist. Was die diesbezüglich eingesetzten Mengen anbelangt, so hat es sich als vorteilhaft erwiesen, wenn der Geschmacks- und/oder Aromabildner in der erfindungsgemäßen Zusammensetzung in Mengen im Bereich von 0,1 Gew.-% bis 10 Gew.-%, bevorzugt im Bereich von 0,25 Gew.-% bis 8 Gew.-%, besonders bevorzugt im Bereich von 0,5 Gew.-% bis 6 Gew.-%, ganz besonders bevorzugt im Bereich von 1 Gew.-% bis 5 Gew.-%, bezogen auf die Zusammensetzung, vorliegt. Zudem kann die erfindungsgemäße Zusammensetzung weitere Inhalts- und/oder Hilfsstoffe umfassen. Die gegebenenfalls vorhandenen Inhalts- und/oder Hilfsstoffe können ausgewählt sein aus Aromen oder Aromastoffen, Säuerungsmitteln, Konservierungsmitteln, Farbstoffen, Mineralstoffen, Stabilisatoren, Füllstoffen, Pressmitteln, Sprengmitteln und deren Mischungen. Die konkrete Auswahl derartiger Substanzen, sowie die Einstellung definierter Mengen liegt dabei im fachüblichen Können des Fachmanns.

Die erfindungsgemäße Zusammensetzung kann eine breite physikalische bzw. körperliche Ausgestaltung aufweisen. Erfindungsgemäß liegt die Zusammensetzung (i) in Form eines Granulats und/oder Pulvers und/oder in Form von Agglomeraten oder (ii) in Form von Kompaktaten, insbesondere als Tabletten und/oder Pillen, vor.

Gemäß einer speziellen Ausgestaltung der vorliegenden Erfindung kann es insbesondere vorgesehen sein, dass die Zusammensetzung die Saccharose und die den glykämischen Index der Zusammensetzung verringernde Substanz (GIVS) als Gemisch, insbesondere als Gemenge, vorzugsweise in Form eines Granulats und/oder Pulvers und/oder in Form von Agglomeraten aufweist. Diesbezüglich können dem Fachmann an sich wohlbekannte Verfahren eingesetzt werden, wie Granulierung, Agglomerierung, Pelletierung und dergleichen, gegebenenfalls gefolgt von einem Mischen der jeweiligen Komponenten, insbesondere sofern diese bei der Partikel-, Granulat-, Pulver- bzw. Agglomeratherstellung getrennt voneinander verarbeitet werden.

Mit anderen Worten liegt die erfindungsgemäße Zusammensetzung sozusagen als vorzugsweise heterogenes Gemisch bzw. Gemenge auf Basis der Einzelbestandteile vor, also einer Mischung von Saccharose einerseits und der den glykämischen Index der Zusammensetzung verringernden Substanz (GIVS) andererseits sowie gegebenenfalls weiteren Inhaltsstoffen.

Gemäß einer weiteren Ausgestaltung der erfindungsgemäßen Zusammensetzung kann es vorgesehen sein, dass die Zusammensetzung die den glykämischen Index der Zusammensetzung verringernde Substanz (GIVS) auf der Saccharose aufgebracht und/oder immobilisiert aufweist. Dabei ist es insbesondere bevorzugt, wenn das Aufbringen und/oder Immobilisieren der den glykämischen Index der Zusammensetzung verringernden Substanz (GIVS) mittels Granulierung, Agglomerierung, Pelletierung oder Coating, vorzugsweise mittels Granulierung, erfolgt ist.

Bevorzugterweise werden als Beschichtungs- bzw. Granulierverfahren insbesondere Wirbelschichtgranulierung, Trockengranulierung oder Sprühgranulierung, vorzugsweise Wirbelschichtgranulierung oder Sprühgranulierung, eingesetzt. Hierbei handelt es sich um gängige Herstellungsverfahren, zu denen es keiner weiteren Ausführungen bedarf.

In diesem Zusammenhang kann es in Bezug auf die Ausgestaltung der erfindungsgemäßen Zusammensetzung erfindungsgemäß vorgesehen sein, dass die einzelnen Partikel der Zusammensetzung, insbesondere des Granulats und/oder des Pulvers und/oder der Agglomerate, in Form von Kern/Hülle-Partikeln ausgebildet sind. Vorzugsweise ist dabei der Kern der jeweiligen Partikel zumindest im Wesentlichen auf Basis von Saccharose und gegebenenfalls weiteren Inhaltsstoffen ausgebildet. Insbesondere kann es erfindungsgemäß vorgesehen sein, dass die Hülle der jeweiligen Partikel zumindest im Wesentlichen auf Basis der den glykämischen Index der Zusammensetzung verringernden Substanz (GIVS) und gegebenenfalls weiteren Inhaltsstoffen ausgebildet ist.

Mit anderen Worten kann es erfindungsgemäß somit vorgesehen sein, dass die Partikel, insbesondere des Granulats und/oder des Pulvers und/oder der Agglomerate, einen inneren Kern aufweisen, welcher zumindest im Wesentlichen aus Saccharose besteht und von außen vollständig oder aber partiell bzw. teilweise mit der den glykämischen Index der Zusammensetzung verringernden Substanz (GIVS) beschichtet und/oder besprüht ist. Derartige Granulate, Pulver und/oder Agglomerate können erfindungsgemäß gleichermaßen auf Basis von dem Fachmann wohlbekannten Verfahren, insbesondere Granulierverfahren, wie Wirbelschichtgranulierung, Trockengranulierung oder Sprühgranulierung und dergleichen, hergestellt werden. Insbesondere kann zur Herstellung der erfindungsgemäßen Zusammensetzung ein sogenannter *"Wurster Coater"* bzw. eine Wurster-Beschichtungsvorrichtung eingesetzt werden.

Was die physikalische Ausgestaltung der erfindungsgemäßen Zusammensetzung weiterhin anbelangt, so ist es erfindungsgemäß bevorzugt, wenn diese eine Schüttdichte im Bereich von 50 g/l bis 800 g/l, insbesondere im Bereich von 100 g/l bis 700 g/l, vorzugsweise im Bereich von 150 g/l bis 600 g/l, aufweist. Hierdurch werden sowohl das Abfüllen der Zusammensetzung im Rahmen ihrer Herstellung als auch die Dosierung im Rahmen ihrer Anwendung verbessert.

Weiterhin kann es vorgesehen sein, dass die erfindungsgemäße Zusammensetzung eine Gesamtrestfeuchte im Bereich von 0,1 Gew.-% bis 7 Gew.-%, insbesondere im Bereich von 0,5 Gew.-% bis 6 Gew.-%, vorzugsweise im Bereich von 1 Gew.-% bis 5 Gew.-%, bezogen auf die Zusammensetzung, aufweist, was die Stabilität, insbesondere die Lagerstabilität, der Zusammensetzung verbessert. Hinsichtlich der Erzielung einer gleichmäßigen Süße- bzw. Aromaverteilung der süßenden Komponenten bzw. der Aromastoffe der erfindungsgemäßen Zusammensetzung ist es darüber hinaus bevorzugt, wenn diese in Flüssigkeiten, insbesondere Wasser und/oder Milch, dispergierbar und/oder zumindest teilweise, vorzugsweise vollständig löslich sind.

Gegenstand der vorliegenden Erfindung ist also eine Zusammensetzung gemäß Ansprüchen 1-9 zum Süßen und/oder Aromatisieren eines Lebensmittels oder als Instant-(Getränke-)Zusammensetzung mit verringertem glykämischem Index (GI) und/oder mit verringertem und/oder verzögertem und/oder retardiertem Anstieg des Blutzuckerspiegels bei Anwendung der Zusammensetzung, insbesondere wie vorangehend beschrieben wurde, wobei die Zusammensetzung
(a) Saccharose, vorzugsweise in einer Menge im Bereich von 20 Gew.-% bis 90 Gew.-%, bevorzugt im Bereich von 20 Gew.-% bis 85 Gew.-%, besonders bevorzugt im Bereich von 20 Gew.-% bis 80 Gew.-%, bezogen auf die Zusammensetzung;
(b) mindestens eine den glykämischen Index der Zusammensetzung verringernde Substanz (GIVS), ausgewählt aus Lactose und Isomaltulose, in einer Menge im Bereich von 2 Gew.-% bis 60 Gew.-%, bezogen auf die Zusammensetzung, und mindestens eine den glykämischen Index der Zusammensetzung verringernde Substanz (GIVS), ausgewählt aus Pflanzenextrakten auf Basis von Äpfeln, Birnen, Trauben, Tomaten und/oder Möhren, wie in Anspruch 1 beschrieben, in einer Menge im Bereich von 0,5 Gew.-% bis 10 Gew.-%, bezogen auf die Zusammensetzung,
(c) gegebenenfalls mindestens einen Süßstoff, vorzugsweise in einer Menge im Bereich von 0,1 Gew.-% bis 50 Gew.-%, insbesondere im Bereich von 0,5 Gew.-% bis 40 Gew.-%, vorzugsweise im Bereich von 1 Gew.-% bis 30 Gew.-%, bevorzugt im Bereich von 2 Gew.-% bis 20 Gew.-%, bezogen auf die Zusammensetzung;
(d) gegebenenfalls mindestens eine Substanz aus der Gruppe von physiologisch annehmbaren Antioxidantien und/oder Vitaminen, insbesondere ausgewählt aus der Gruppe von Vitamin A, C und/oder E, vorzugsweise in einer Menge im Bereich von 0,001 Gew.-% bis 5 Gew.-%, insbesondere im Bereich von 0,01 Gew.-% bis 4 Gew.-%, vorzugsweise im Bereich von 0,05 Gew.-% bis 3 Gew.-%, bevorzugt im Bereich von 0,1 Gew.-% bis 2 Gew.-%, bezogen auf die Zusammensetzung; und
(e) gegebenenfalls mindestens einen Geschmacks- und/oder Aromabildner, vorzugsweise in einer Menge im Bereich von 0,1 Gew.-% bis 10 Gew.-%, bevorzugt im Bereich von 0,25 Gew.-% bis 8 Gew.-%, besonders bevorzugt im Bereich von 0,5 Gew.-% bis 6 Gew.-%, ganz besonders bevorzugt im Bereich von 1 Gew.-% bis 5 Gew.-%, bezogen auf die Zusammensetzung;
aufweist.

Wie zuvor dargestellt, ist es erfindungsgemäß vorgesehen, dass die Zusammensetzung einen verringerten glykämischen Index (GI), insbesondere einen im Vergleich zu Saccharose verringerten glykämischen Index (GI) gemäß Anspruch 1, aufweist. aufweist.

Mit anderen Worten ist es erfindungsgemäß vorgesehen, dass die Zusammensetzung nach dem Verzehr zu einem verringerten und/oder verzögerten und/oder retardierten Anstieg des Blutzuckerspiegels im Vergleich zu Saccharose führt, was insbesondere durch die verringerte bzw. verzögerte bzw. retardierte Aufnahme von Saccharose bzw. deren enzymatischen Spaltungsprodukten hervorgerufen wird. Als Folge wird eine Ausschüttung großer Mengen von Insulin nach Verzehr der erfindungsgemäßen Zusammensetzung vermieden. Dabei zeichnet sich die erfindungsgemäße Zusammensetzung durch hervorragende organoleptische Eigenschaften aus, insbesondere im Hinblick auf einen natürlichen Süßegeschmack, welcher demjenigen von Saccharose entspricht, einhergehend mit einer hohen Süßkraft, welche gleichermaßen derjenigen von Saccharose entsprechen kann.

Die ernährungsphysiologische Verbesserung der Zusammensetzung, insbesondere durch die Verringerung des glykämischen Index (GI) der Zusammensetzung, auch unter Einsatz von Saccharose als Hauptsüßungskomponente, war vollkommen überraschend.

Darüber hinaus betrifft die vorliegende Erfindung - gemäß einem **zweiten** Aspekt der vorliegenden Erfindung - die Verwendung einer Zusammensetzung, wie sie zuvor beschrieben wurde, zum Süßen und/oder Aromatisieren eines Lebensmittels, vorzugsweise eines industriell gefertigten Lebensmittels;
insbesondere wobei das Süßen und/oder Aromatisieren des Lebensmittels, vorzugsweise des industriell gefertigten Lebensmittels, im Rahmen des Herstellungsprozesses des Lebensmittels und/oder bei der Herstellung des Lebensmittels erfolgt; und/oder
insbesondere wobei das Lebensmittel eine Süßspeise und/oder Süßware ist, insbesondere ausgewählt aus der Gruppe von Schokoladenerzeugnissen, schokoladen- oder nougatbasierten Brotaufstrichen, fruchtbasierten Brotaufstrichen, Dauerbackwaren und/oder Speiseeis.

Da insbesondere industriell gefertigte Lebensmittel aus ernährungsphysiologischer Sicht aufgrund des hohen Saccharosegehalts oftmals problematisch sind bzw. alternative Süßungsmittel oftmals keine zufriedenstellenden organoleptischen Eigenschaften gewährleisten, können durch die Verwendung der erfindungsgemäßen Zusammensetzung die diesbezüglichen Probleme des Standes der Technik in effektiver Weise behoben werden.

In diesem Zusammenhang kann es insbesondere vorgesehen sein, dass das Süßen und/oder Aromatisieren des Lebensmittels, vorzugsweise des industriell gefertigten Lebensmittels, bzw. die Verwendung der Zusammensetzung zum Süßen bzw. Aromatisieren des Lebensmittels, insbesondere des industriell gefertigten Lebensmittels, im Rahmen des Herstellungsprozesses des Lebensmittels und/oder bei der Herstellung des Lebensmittels erfolgt.

Insbesondere kann das Lebensmittel ausgewählt sein aus der Gruppe von Süßspeisen und/oder Süßwaren, insbesondere ausgewählt aus der Gruppe von Schokoladenerzeugnissen, schokoladen- oder nougatbasierten Brotaufstrichen, fruchtbasierten Brotaufstrichen, Dauerbackwaren und/oder Speiseeis. Grundsätzlich kann die erfindungsgemäße Zusammensetzung jedoch zum Süßen bzw. Aromatisieren einer großen Anzahl verschiedener Lebensmittel eingesetzt werden, welche eine bestimmte Süße bzw. ein bestimmtes Aroma aufweisen sollen.

Zudem kann es im Rahmen der vorliegenden Erfindung vorgesehen sein, die Zusammensetzung, wie zuvor beschrieben, als Instant-(Getränke-)Zusammensetzung, insbesondere Instant-Teegetränke, Instant-Kaffeegetränke oder Instant-Cappuccinogetränke, zu verwenden. Diesbezüglich kann die erfindungsgemäße Zusammensetzung in eine trinkbare Flüssigkeit, wie Wasser oder Milch, eingebracht bzw. darin gelöst werden.

Für weitergehende Einzelheiten zu diesem Erfindungsaspekt kann zur Vermeidung unnötiger Wiederholungen auf die Ausführungen zu den obigen Erfindungsaspekten sowie auf die nachfolgenden Ausführungen in den weiteren Erfindungsaspekten verwiesen werden, welche in Bezug auf diesen Erfindungsaspekt entsprechend gelten.

Weiterer Gegenstand der vorliegenden Erfindung - gemäß einem **dritten** Aspekt der vorliegenden Erfindung - ist zudem die Verwendung einer Zusammensetzung, wie zuvor beschrieben, als Tafel- bzw. Streusüße.

Auf diese Weise können beispielsweise Getränke, wie Tee oder Kaffee, oder aber sonstige Speisen, insbesondere Süßspeisen, gezielt aromatisiert bzw. gesüßt werden.

Für weitergehende Einzelheiten zu diesem Erfindungsaspekt kann zur Vermeidung unnötiger Wiederholungen auf die Ausführungen zu den obigen Erfindungsaspekten sowie zu den nachfolgenden Erfindungsaspekten verwiesen werden, welche in Bezug auf diesen Erfindungsaspekt entsprechend gelten.

Wiederum weiterer Gegenstand der vorliegenden Erfindung - gemäß einem **vierten** Aspekt der vorliegenden Erfindung - ist ein Verfahren zur Herstellung einer Zusammensetzung, wie zuvor beschrieben, wobei das Verfahren die folgenden Verfahrensschritte umfasst:
(i) Herstellung einer Mischung, welche (a) Saccharose in einer Menge im Bereich von 5 Gew.-% bis 90 Gew.-%, bezogen auf die Zusammensetzung, und (b) mindestens eine den glykämischen Index der Zusammensetzung verringernde Substanz (GIVS), ausgewählt aus Lactose und Isomaltulose in einer Menge im Bereich von 2 Gew.-% bis 60 Gew.-%, bezogen auf die Zusammensetzung, und mindestens eine den glykämischen Index der Zusammensetzung verringernde Substanz (GIVS), ausgewählt aus Pflanzenextrakten auf Basis von Äpfeln, Birnen, Trauben, Tomaten und/oder Möhren, in einer Menge im Bereich von 0,5 Gew.-% bis 10 Gew.-%, bezogen auf die Zusammensetzung, wobei die Pflanzenextrakte auf Basis von Äpfeln, Birnen, Trauben, Tomaten und/oder Möhren unverdauliche Kohlenhydrate, pflanzenbasierte Schleimstoffe, Cellulosederivate und phenolische Verbindungen enthalten, sowie gegebenenfalls mindestens eine Substanz aus der Gruppe von physiologisch annehmbaren Antioxidantien, Geschmacks- und/oder Aromabildnern, Süßstoffen sowie gegebenenfalls mindestens einen weiteren Inhalts- und/oder Hilfsstoff umfasst;
(ii) gegebenenfalls nachfolgende Herstellung eines Granulats und/oder Agglomerats aus der in Schritt i) hergestellten Mischung.

In diesem Zusammenhang ist es erfindungsgemäß möglich, dass in Schritt (i) des erfindungsgemäßen Verfahrens auch jeweilige Granulate bzw. Agglomerate, welche jeweils die Komponente (a) oder die Komponente (b) bzw. die weiteren Komponenten enthalten bzw. hieraus bestehen, vermischt werden. In diesem Fall kann Schritt (ii) entfallen.

Im Rahmen des erfindungsgemäßen Verfahrens erfolgt die Herstellung der Granulate bzw. Agglomerate durch dem Fachmann an sich bekannte Verfahren, insbesondere Granulierverfahren, wie beispielsweise Wirbelschichtgranulierung, Trockengranulierung oder Sprühgranulierung. Da es sich hierbei um dem Fachmann grundsätzlich wohlbekannte Verfahren handelt, bedarf es an dieser Stelle grundsätzlich keiner weiterführenden Ausführungen.

Für weitergehende Einzelheiten zu diesem Erfindungsaspekt kann zur Vermeidung unnötiger Wiederholungen auf obige Ausführungen zu den übrigen Erfindungsaspekten verwiesen werden, welche in Bezug auf diesen Erfindungsaspekt entsprechend gelten.

Wiederum weiterer Gegenstand der vorliegenden Erfindung - gemäß einem **fünften** Aspekt der vorliegenden Erfindung - ist ein Verfahren zur Herstellung einer Zusammensetzung, wie sie zuvor beschrieben wurde, wobei das Verfahren die folgenden Verfahrensschritte umfasst:
(i) Herstellung einer Mischung, welche (a) Saccharose in einer Menge im Bereich von 20 Gew.-% bis 90 Gew.-%, bezogen auf die Zusammensetzung, und (b) mindestens eine den glykämischen Index der Zusammensetzung verringernde Substanz (GIVS), ausgewählt aus Lactose und Isomaltulose in einer Menge im Bereich von 2 Gew.-% bis 60 Gew.-%, bezogen auf die Zusammensetzung, und mindestens eine den glykämischen Index der Zusammensetzung verringernde Substanz (GIVS), ausgewählt aus Pflanzenextrakten auf Basis von Äpfeln, Birnen, Trauben, Tomaten und/oder Möhren, in einer Menge im Bereich von 0,5 Gew.-% bis 10 Gew.-%, bezogen auf die Zusammensetzung, wobei die Pflanzenextrakte auf Basis von Äpfeln, Birnen, Trauben, Tomaten und/oder Möhren unverdauliche Kohlenhydrate, pflanzenbasierte Schleimstoffe, Cellulosederivate und phenolische Verbindungen enthalten,
   sowie gegebenenfalls mindestens eine Substanz aus der Gruppe von physiologisch annehmbaren Antioxidantien, Geschmacks- und/oder Süßstoffen sowie gegebenenfalls mindestens einen weiteren Inhalts- und/oder Hilfsstoff umfasst;
(ii) nachfolgende Herstellung von Kompaktaten, insbesondere Tabletten und/oder Pillen, aus der in Schritt i) hergestellten Mischung, insbesondere durch Verpressen und/oder Tablettieren der in Schritt i) hergestellten Mischung.

Bei den im Rahmen des erfindungsgemäßen Verfahrens zur Herstellung von Kompaktaten, insbesondere Tabletten und/oder Pillen, eingesetzten Herstellungsverfahren, wie beispielsweise Verpressen und/oder Tablettieren, handelt es sich ebenfalls um dem Fachmann grundsätzlich wohlbekannte Verfahren, so, dass es hierzu keiner weiterführenden Ausführungen bedarf.

Für weitergehende Einzelheiten zu diesem Erfindungsaspekt kann zur Vermeidung unnötiger Wiederholungen auf obige Ausführungen zu den übrigen Erfindungsaspekten verwiesen werden, welche in Bezug auf diesen Erfindungsaspekt entsprechend gelten.

Schließlich ist Gegenstand der vorliegenden Erfindung - gemäß einem **sechsten** Aspekt der vorliegenden Erfindung - ein Verfahren zur Herstellung einer Zusammensetzung, wie sie zuvor beschrieben wurde, wobei das Verfahren die folgenden Verfahrensschritte umfasst:
(i) Herstellung einer Mischung, welche (b) mindestens eine den glykämischen Index der Zusammensetzung verringernde Substanz (GIVS), ausgewählt aus Lactose und Isomaltulose und in einer Menge im Bereich von 10 Gew.-% bis 40 Gew.-%, bezogen auf die Zusammensetzung, und mindestens eine den glykämischen Index der Zusammensetzung verringernde Substanz (GIVS), ausgewählt aus Pflanzenextrakten auf Basis von Äpfeln, Birnen, Trauben, Tomaten und/oder Möhren, in einer Menge im Bereich von 0,5 Gew.-% bis 10 Gew.-%, bezogen auf die Zusammensetzung, wobei die Pflanzenextrakte auf Basis von Äpfeln, Birnen, Trauben, Tomaten und/oder Möhren unverdauliche Kohlenhydrate, pflanzenbasierte Schleimstoffe, Cellulosederivate und phenolische Verbindungen enthalten,
   sowie gegebenenfalls mindestens eine Substanz aus der Gruppe von physiologisch annehmbaren Antioxidantien, Geschmacks- und/oder Aromabildnern, Süßstoffen sowie gegebenenfalls mindestens einen weiteren Inhalts- und/oder Hilfsstoff umfasst; nachfolgend
(ii) Aufbringen und/oder Immobilisieren der in Verfahrensschritt i) bereitgestellten Substanz(en) an einem festen Träger auf Basis von Saccharose in einer Menge im Bereich von 20 Gew.-% bis 90 Gew.-%, bezogen auf die Zusammensetzung, insbesondere mittels Granulierung, Agglomerierung, Pelletierung oder Coating, vorzugsweise mittels Granulierung, besonders bevorzugt mittels Wirbelschichtgranulierung, Trockengranulierung oder Sprühgranulierung.

Das erfindungsgemäße Verfahren gemäß diesem Aspekt führt insbesondere zur Ausbildung von Granulaten, Pulvern und/oder Agglomeraten auf Basis von Partikeln, welche insbesondere eine Kern/Hülle-Struktur aufweisen, d. h. einen inneren Kern besitzen, welcher zumindest im Wesentlichen vollständig oder teilweise von einer Hülle umgeben ist. Dabei ist es erfindungsgemäß bevorzugt, wenn die den Kern bildenden Substanzen von den die Hülle bildenden Substanzen verschieden sind.

Insbesondere ist es in diesem Zusammenhang erfindungsgemäß besonders bevorzugt, wenn der Kern zumindest im Wesentlichen auf Basis von Saccharose ausgebildet ist und die Hülle zumindest im Wesentlichen die mindestens eine den glykämischen Index der Zusammensetzung verringernde Substanz (GIVS) aufweist. Darüber hinaus kann es vorgesehen sein, dass der Kern und/oder die Hülle weitere Inhaltsstoffe aufweisen, insbesondere ausgewählt aus der Gruppe von physiologisch annehmbaren Antioxidantien, Geschmacks- und/oder Aromabildnern, Süßstoffen sowie gegebenenfalls mindestens einen weiteren Inhalts- und/oder Hilfsstoff.

Im Rahmen der erfindungsgemäßen Verfahren kann die Herstellung der Granulate bzw. Agglomerate durch an sich bekannte Granulierverfahren erfolgen, wie beispielsweise Wirbelschichtgranulierung, Trockengranulierung oder Sprühgranulierung. Da es sich hierbei um dem Fachmann grundsätzlich wohlbekannte Verfahren handelt, bedarf es an dieser Stelle keiner weiterführenden Ausführungen.

Für weitergehende Einzelheiten zu diesem Erfindungsaspekt kann zur Vermeidung unnötiger Wiederholungen auf obige Ausführungen zu den übrigen Erfindungsaspekten verwiesen werden, welche in Bezug auf diesen Erfindungsaspekt entsprechend gelten.

### Ausführungsbeispiele:

Nachfolgend werden erfindungsgemäße Ausführungsformen beispielhaft auch anhand von Endprodukten der erfindungsgemäßen Zusammensetzung beschrieben.

### Beispiel 1: Rezepturbeispiel für eine erfindungsgemäße Zusammensetzung zum Süßen und/oder Aromatisieren eines Lebensmittels

Es wurde eine Ausgangsmischung auf Basis der folgenden Bestandteile bzw. Inhaltsstoffe hergestellt:

| | |
|---|---|
| Saccharose | 75,00 Gew.-% |
| Lactose | 24,00 Gew.-% |
| Vitaminmischung (Vitamin A, C und E) | 0,5 Gew.-% |
| Obstextrakt (Apfelextrakt mit Polyphenolen) | 0,5 Gew.-% |

Die zuvor beschriebene Mischung wird durch den Einsatz eines dem Fachmann wohlbekannten Wirbelschichtverfahrens zu einem Granulat verarbeitet. Das so erhaltene Granulat wird auf einen Gesamtrestfeuchtegehalt von etwa 3 Gew.-%, bezogen auf die Zusammensetzung bzw. des Granulat, eingestellt. Insgesamt resultiert eine granulatförmige Zusammensetzung, welche eine hervorragende Rieselfähigkeit und somit eine gute Dosierbarkeit bei einem geringen glykämischen Index von ungefähr 55 aufweist. Die Zusammensetzung weist eine natürlich schmeckende Süße auf.

### Beispiel 2: Rezepturbeispiel für eine erfindungsgemäße Zusammensetzung zum Süßen bzw. Aromatisieren eines Lebensmittels auf Basis von Kern/Hülle-Partikeln

Es wurde eine Ausgangsmischung auf Basis der folgenden Bestandteile bzw. Inhaltsstoffe hergestellt:

| | |
|---|---|
| Saccharose | 50,00 Gew.-% |
| Isomaltulose | 24,00 Gew.-% |
| Nutriose | 25,00 Gew.-% |
| Vitaminmischung (Vitamin A, C und E) | 0,5 Gew.-% |
| Obstextrakt (Apfelextrakt mit Polyphenolen) | 0,5 Gew.-% |

Die zuvor beschriebene Mischung auf Basis von Sacchariden wird mit dem Fachmann wohlbekannten Granulierverfahren in einem Wurster-Coater granuliert und dabei mit einer Vitaminmischung, enthaltend die Vitamine A, C, und E, sowie polyphenolhaltigem Apfelextrakt beschichtet. Darüber hinaus wird die erfindungsgemäße Zusammensetzung im Rahmen des Granulierverfahrens auf eine Gesamtrestfeuchte von ca. 3 Gew.-% eingestellt. Es resultiert eine feinteilige Zusammensetzung auf Basis von gleichmäßig geformten Granulaten, welche sich insbesondere durch eine hervorragende Dosierbarkeit aufgrund des guten Fließverhaltens und einen gegenüber Saccharose verringerten glykämischen Index von etwa 50 auszeichnet. Auch diese Zusammensetzung weist eine natürlich schmeckende Süße auf.

### Beispiel 3: Rezepturbeispiel für eine erfindungsgemäße Zusammensetzung zur Verwendung als Instant-(Getränke-)Zusammensetzung zur Herstellung eines Zitronentees

Es wurde eine Ausgangsmischung auf Basis der folgenden Bestandteile bzw. Inhaltsstoffe hergestellt:

| | |
|---|---|
| Saccharose | 45,00 Gew.-% |
| Isomaltulose | 25,00 Gew.-% |
| Nutriose | 18,00 Gew.-% |
| Zitronensäure | 5,00 Gew.-% |
| Obstextrakt (Apfelextrakt mit Polyphenolen) | 0,5 Gew.-% |
| Vitaminmischung (Vitamin A, C und E) | 0,5 Gew.-% |
| Schwarzteeextrakt | 3,00 Gew.-% |
| Aroma | 1,5 Gew.-% |
| Zitronenfruchtpulver | 1,5 Gew.-% |

Die zuvor beschriebene Mischung wird zu einem Granulat verarbeitet. Anschließend wird das so erhaltene Granulat auf einen Gesamtrestfreuchtegehalt von etwa 3 Gew.-%, bezogen auf das Granulat, eingestellt. Es resultiert eine Instant-(Getränke-)Zusammensetzung, welche sich zur Aufbereitung bzw. Zubereitung eines Teegetränks eignet. Hierzu werden ca. 5 g der erfindungsgemäßen Getränkezusammensetzung in 100 ml Wasser gelöst, so dass ein Teegetränk resultiert. Das Teegetränk zeichnet sich durch hervorragende organoleptische Eigenschaften aus, insbesondere eine natürliche Süße. Darüber hinaus liegt der glykämische Index der Zusammensetzung bzw. des resultierenden Tee-Getränks bei ungefähr 45.

## Patentansprüche

1. Zusammensetzung zum Süßen und/oder Aromatisieren eines Lebensmittels,
wobei die Zusammensetzung (i) in Form eines Granulats und/oder Pulvers und/oder in Form von Agglomeraten oder (ii) in Form von Kompaktaten vorliegt und
wobei die Zusammensetzung
(a) Saccharose in einer Menge im Bereich von 20 Gew.-% bis 90 Gew.-%, bezogen auf die Zusammensetzung, und
(b) mindestens eine den glykämischen Index der Zusammensetzung verringernde Substanz (GIVS), ausgewählt aus Lactose und Isomaltulose, in einer Menge im Bereich von 2 Gew.-% bis 60 Gew.-%, bezogen auf die Zusammensetzung, und mindestens eine den glykämischen Index der Zusammensetzung verringernde Substanz (GIVS), ausgewählt aus Pflanzenextrakten auf Basis von Äpfeln, Birnen, Trauben, Tomaten und/oder Möhren, in einer Menge im Bereich von 0,5 Gew.-% bis 10 Gew.-%, bezogen auf die Zusammensetzung,
aufweist,
wobei die Pflanzenextrakte auf Basis von Äpfeln, Birnen, Trauben, Tomaten und/oder Möhren unverdauliche Kohlenhydrate, pflanzenbasierte Schleimstoffe, Cellulosederivate und phenolische Verbindungen enthalten, und
wobei die Zusammensetzung einen glykämischen Index (GI) im Bereich von 30 bis 55, bezogen auf Glucose als Referenzwert, aufweist.

2. Zusammensetzung nach Anspruch 1, wobei die Zusammensetzung einen glykämischen Index (GI) von höchstens 50, besonders bevorzugt höchstens 40, bezogen auf Glucose als Referenzwert, aufweist und/oder wobei die Zusammensetzung einen glykämischen Index (GI) im Bereich von 30 bis 50, bezogen auf Glucose als Referenzwert, aufweist.

3. Zusammensetzung nach Anspruch 1 oder 2, wobei die Zusammensetzung (a) Saccharose in einer Menge im Bereich von 20 Gew.-% bis 85 Gew.-%, besonders bevorzugt im Bereich von 20 Gew.-% bis 80 Gew.-%, bezogen auf die Zusammensetzung, aufweist und/oder wobei die Zusammensetzung (a) Saccharose in einer Menge von höchstens 85 Gew.-%, besonders bevorzugt höchstens 80 Gew.-%, bezogen auf die Zusammensetzung, aufweist.

4. Zusammensetzung nach einem der vorangehenden Ansprüche, wobei die Zusammensetzung (b) die den glykämischen Index der Zusammensetzung verringernde Substanz (GIVS), ausgewählt aus Pflanzenextrakten auf Basis von Äpfeln, Birnen, Trauben, Tomaten und/oder Möhren, in einer Menge im Bereich von 0,5 Gew.-% bis 8 Gew.-%, vorzugsweise im Bereich von 0,5 Gew.-% bis 5 Gew.-%, bevorzugt im Bereich von 0,5 Gew.-% bis 1 Gew.-%, bezogen auf die Zusammensetzung, aufweist.

5. Zusammensetzung nach einem der vorangehenden Ansprüche, wobei die Zusammensetzung (b) die den glykämischen Index (GI) der Zusammensetzung verringernde Substanz (GIVS), ausgewählt aus Isomaltulose und/oder Lactose, in einer Menge im Bereich von 5 Gew.-% bis 50 Gew.-%, bevorzugt im Bereich von 10 Gew.-% bis 40 Gew.-%, bezogen auf die Zusammensetzung, aufweist.

6. Zusammensetzung nach einem der vorangehenden Ansprüche,
wobei die Zusammensetzung mindestens einen Süßstoff aufweist, insbesondere wobei der Süßstoff ausgewählt ist aus der Gruppe von Acesulfam, Cyclamat, Glycyrrhizin, Aspartam, Dulcin, Saccharin, Rebaudiosiden, vorzugsweise Steviosid, Naringin-Dihydrochalkon, Monellin, Neohesperidin-Dihydrochalkon, Thaumatin, Sucralose, Neotam und deren physiologisch annehmbaren Salzen und/oder Derivaten und/oder insbesondere wobei der Süßstoff ausgewählt ist aus der Gruppe von Aspartam, Acesulfam, Saccharin, Cyclamat, Steviosid und Sucralose sowie deren Mischungen,
insbesondere wobei die Zusammensetzung den Süßstoff in einer Menge im Bereich von 0,1 Gew.-% bis 50 Gew.-%, insbesondere im Bereich von 0,5 Gew.-% bis 40 Gew.-%, vorzugsweise im Bereich von 1 Gew.-% bis 30 Gew.-%, bevorzugt im Bereich von 2 Gew.-% bis 20 Gew.-%, bezogen auf die Zusammensetzung, aufweist.

7. Zusammensetzung nach einem der vorangehenden Ansprüche, wobei die Zusammensetzung mindestens eine Substanz aus der Gruppe von physiologisch annehmbaren Antioxidantien enthält, vorzugsweise ausgewählt aus der Gruppe von (i) sekundären Pflanzenstoffen, insbesondere phenolischen Verbindungen, vorzugsweise einfachen Phenolen, Polyphenolen, Xanthonen, Phenylpropanoiden, Stilbenen und/oder deren Glykosiden, bevorzugt Resveratol und/oder Flavonoiden; und/oder isoprenoiden Verbindungen, vorzugsweise Terpenen, Steroiden und/oder deren Glykosiden, Carotinoiden und/oder Speicherlipiden; und/oder Alkaloiden, insbesondere Coffein und/oder Nikotin; und/oder Aminosäuren, insbesondere Alliin und/oder Canavanin; und deren Mischungen; (ii) Vitaminen, vorzugsweise Vitamin A, C und/oder E; (iii) Mineralstoffen und/oder Spurenelementen, insbesondere zink-, eisen-, kupfer-, mangan- und/oder selenhaltigen Verbindungen; und/oder insbesondere wobei die Zusammensetzung die Substanz aus der Gruppe von physiologisch annehmbaren Antioxidantien in einer Menge im Bereich von 0,001 Gew.-% bis 5 Gew.-%, insbesondere im Bereich von 0,01 Gew.-% bis 4 Gew.-%, vorzugsweise im Bereich von 0,05 Gew.-% bis 3 Gew.-%, bevorzugt im Bereich von 0,1 Gew.-% bis 2 Gew.-%, bezogen auf die Zusammensetzung, aufweist, und/oder
wobei die Zusammensetzung mindestens einen Geschmacks- und/oder Aromabildner aufweist, insbesondere wobei der Geschmacks- und/oder Aromabildner ausgewählt ist aus der Gruppe von (i) Extrakten, insbesondere Pflanzenextrakten, Fruchtextrakten und Tee-Extrakten; (ii) Aromen und/oder Aromastoffen; (iii) Pflanzenpulvern, Fruchtpulvern und Saftpulvern und (iv) deren Mischungen; und/oder insbesondere wobei die Zusammensetzung den Geschmacks- und/oder Aromabildner in Mengen im Bereich von 0,1 Gew.-% bis 10 Gew.-%, bevorzugt im Bereich von 0,25 Gew.-% bis 8 Gew.-%, besonders bevorzugt im Bereich von 0,5 Gew.-% bis 6 Gew.-%, ganz besonders bevorzugt im Bereich von 1 Gew.-% bis 5 Gew.-%, bezogen auf die Zusammensetzung, aufweist, und/oder
wobei die Zusammensetzung weitere Inhalts- und/oder Hilfsstoffe umfasst, insbesondere ausgewählt aus Aromen oder Aromastoffen, Säuerungsmitteln, Konservierungsmitteln, Farbstoffen, Mineralstoffen, Stabilisatoren, Füllstoffen, Pressmitteln, Sprengmitteln und deren Mischungen.

8. Zusammensetzung nach einem der vorangehenden Ansprüche,
wobei die Zusammensetzung (b) die den glykämischen Index (GI) der Zusammensetzung verringernde Substanz (GIVS) auf der Saccharose aufgebracht und/oder immobilisiert aufweist, insbesondere wobei das Aufbringen und/oder Immobilisieren (b) der den glykämischen Index der Zusammensetzung verringernden Substanz (GIVS) mittels Granulierung, Agglomerierung, Pelletierung oder Coating, vorzugsweise mittels Granulierung, erfolgt ist, insbesondere wobei die Granulierung mittels Wirbelschichtgranulierung, Trockengranulierung oder Sprühgranulierung, vorzugsweise mittels Wirbelschichtgranulierung und/oder Sprühgranulierung, erfolgt ist; und/oder
wobei die einzelnen Partikel der Zusammensetzung, insbesondere des Granulats und/oder des Pulvers und/oder der Agglomerate, in Form von Kern/Hülle-Partikeln ausgebildet sind;
insbesondere wobei der Kern der jeweiligen Partikel zumindest im Wesentlichen auf Basis von (a) Saccharose und gegebenenfalls weiteren Inhaltsstoffen ausgebildet ist und/oder
insbesondere wobei die Hülle der jeweiligen Partikel zumindest im Wesentlichen auf Basis (b) der den glykämischen Index der Zusammensetzung verringernden Substanz (GIVS) und gegebenenfalls weiteren Inhaltsstoffen ausgebildet ist.

9. Zusammensetzung nach einem der vorangehenden Ansprüche,
wobei die Schüttdichte der Zusammensetzung im Bereich von 50 g/l bis 800 g/l, insbesondere im Bereich von 100 g/l bis 700 g/l, vorzugsweise im Bereich von 150 g/l bis 600 g/l, liegt und/oder
wobei die Zusammensetzung eine Gesamtrestfeuchte im Bereich von 0,1 Gew.-% bis 7 Gew.-%, insbesondere im Bereich von 0,5 Gew.-% bis 6 Gew.-%, vorzugsweise im Bereich von 1 Gew.-% bis 5 Gew.-%, bezogen auf die Zusammensetzung, aufweist und/oder
wobei die Zusammensetzung in Flüssigkeiten, insbesondere Wasser und/oder Milch, dispergierbar und/oder zumindest teilweise, vorzugsweise vollständig löslich ist und/oder
wobei die Zusammensetzung einen verringerten glykämischen Index (GI), insbesondere einen im Vergleich zu Saccharose verringerten glykämischen Index (GI), aufweist und/oder wobei die Zusammensetzung bei ihrer Anwendung zu einem verringerten und/oder verzögerten und/oder retardierten Anstieg des Blutzuckerspiegels im Vergleich zu Saccharose führt.

10. Verwendung einer Zusammensetzung gemäß einem der vorangehenden Ansprüche zum Süßen und/oder Aromatisieren eines Lebensmittels, vorzugsweise eines industriell gefertigten Lebensmittels;
insbesondere wobei das Süßen und/oder Aromatisieren des Lebensmittels, vorzugsweise des industriell gefertigten Lebensmittels, im Rahmen des Herstellungsprozesses des Lebensmittels und/oder bei der Herstellung des Lebensmittels erfolgt; und/oder
insbesondere wobei das Lebensmittel eine Süßspeise und/oder Süßware ist, insbesondere ausgewählt aus der Gruppe von Schokoladenerzeugnissen, schokoladen- oder nougatbasierten Brotaufstrichen, fruchtbasierten Brotaufstrichen, Dauerbackwaren und/oder Speiseeis.

11. Verwendung einer Zusammensetzung gemäß einem der vorangehenden Ansprüche als Tafel- und/oder Streusüße.

12. Verfahren zur Herstellung einer Zusammensetzung gemäß einem der vorangehenden Ansprüche, wobei das Verfahren die folgenden Verfahrensschritte umfasst:
(i) Herstellung einer Mischung, welche (a) Saccharose in einer Menge im Bereich von 20 Gew.-% bis 90 Gew.-%, bezogen auf die Zusammensetzung, und (b) mindestens eine den glykämischen Index der Zusammensetzung verringernde Substanz (GIVS), ausgewählt aus Lactose und Isomaltulose in einer Menge im Bereich von 2 Gew.-% bis 60 Gew.-%, bezogen auf die Zusammensetzung, und mindestens eine den glykämischen Index der Zusammensetzung verringernde Substanz (GIVS), ausgewählt aus Pflanzenextrakten auf Basis von Äpfeln, Birnen, Trauben, Tomaten und/oder Möhren, in einer Menge im Bereich von 0,5 Gew.-% bis 10 Gew.-%, bezogen auf die Zusammensetzung, wobei die Pflanzenextrakte auf Basis von Äpfeln, Birnen, Trauben, Tomaten und/oder Möhren unverdauliche Kohlenhydrate, pflanzenbasierte Schleimstoffe, Cellulosederivate und phenolische Verbindungen enthalten,
sowie gegebenenfalls mindestens eine Substanz aus der Gruppe von physiologisch annehmbaren Antioxidantien, Geschmacks- und/oder Aromabildnern, Süßstoffen sowie gegebenenfalls mindestens einen weiteren Inhalts- und/oder Hilfsstoff umfasst;
(ii) nachfolgende Herstellung von Kompaktaten, insbesondere Tabletten und/oder Pillen, aus der in Schritt i) hergestellten Mischung, insbesondere durch Verpressen und/oder Tablettieren der in Schritt i) hergestellten Mischung.

13. Verfahren zur Herstellung einer Zusammensetzung nach einem der vorangehenden Ansprüche, wobei das Verfahren die folgenden Verfahrensschritte umfasst:
(i) Herstellung einer Mischung, welche (b) mindestens eine den glykämischen Index der Zusammensetzung verringernde Substanz (GIVS), ausgewählt aus Lactose und Isomaltulose und in einer Menge im Bereich von 10 Gew.-% bis 40 Gew.-%, bezogen auf die Zusammensetzung, und mindestens eine den glykämischen Index der Zusammensetzung verringernde Substanz (GIVS), ausgewählt aus Pflanzenextrakten auf Basis von Äpfeln, Birnen, Trauben, Tomaten und/oder Möhren, in einer Menge im Bereich von 0,5 Gew.-% bis 10 Gew.-%, bezogen auf die Zusammensetzung, wobei die Pflanzenextrakte auf Basis von Äpfeln, Birnen, Trauben, Tomaten und/oder Möhren unverdauliche Kohlenhydrate, pflanzenbasierte Schleimstoffe, Cellulosederivate und phenolische Verbindungen enthalten, sowie gegebenenfalls mindestens eine Substanz aus der Gruppe von physiologisch annehmbaren Antioxidantien, Geschmacks- und/oder Aromabildnern, Süßstoffen sowie gegebenenfalls mindestens einen weiteren Inhalts- und/oder Hilfsstoff umfasst; nachfolgend
(ii) Aufbringen und/oder Immobilisieren der in Verfahrensschritt i) bereitgestellten Substanz(en) an einem festen Träger auf Basis von Saccharose in einer Menge im Bereich von 20 Gew.-% bis 90 Gew.-%, bezogen auf die Zusammensetzung, insbesondere mittels Granulierung, Agglomerierung, Pelletierung oder Coating, vorzugsweise mittels Granulierung, besonders bevorzugt mittels Wirbelschichtgranulierung, Trockengranulierung oder Sprühgranulierung.

## Claims

1. A composition for sweetening and/or flavouring a foodstuff,
wherein the composition (i) is in the form of a granular material and/or powder and/or in the form of agglomerates or (ii) in the form of compacted material and
wherein the composition comprises
(a) sucrose in a quantity in the range of from 20 wt% to 90 wt% in relation to the composition, and
(b) at least one substance reducing the glycaemic index of the composition which is selected from lactose and isomaltulose in a quantity in the range of from 2 wt% to 60 wt% in relation to the composition, and at least one substance reducing the glycaemic index of the composition which is selected from plant extracts based on apples, pears, grapes, tomatoes and/or carrots in a quantity in the range of from 0.5 wt% to 10 wt% in relation to the composition,
wherein the plant extracts based on apples, pears, grapes, tomatoes and/or carrots contain indigestible carbohydrates, plant-based mucilages, cellulose derivatives and phenolic compounds, and
wherein the composition has a glycaemic index (GI) in the range of from 30 to 55 in relation to glucose as a reference value.

2. The composition according to claim 1, wherein the composition has a glycaemic index (GI) of at most 50, particularly preferably at most 40, in relation to glucose as a reference value, and/or wherein the composition has a glycaemic index (GI) in the range of from 30 to 50 in relation to glucose as a reference value.

3. The composition according to claim 1 or 2, wherein the composition (a) comprises sucrose in a quantity in the range of from 20 wt% to 85 wt%, particularly preferably in the range of from 20 wt% to 80 wt% in relation to the composition, and/or wherein the composition (a) comprises sucrose in a quantity of at most 85 wt%, particularly preferably at most 80 wt% in relation to the composition.

4. The composition according to one of the preceding claims, wherein the composition (b) has the substance reducing the glycaemic index of the composition which is selected from plant extracts based on apples, pears, grapes, tomatoes and/or carrots in a quantity in the range of from 0.5 wt% to 8 wt%, preferably in the range of from 0.5 wt% to 5 wt%, more preferably in the range of from 0.5 wt% to 1 wt% in relation to the composition.

5. The composition according to one of the preceding claims, wherein the composition (b) has the substance reducing the glycaemic index (GI) of the composition which is selected from isomaltulose and/or lactose in a quantity in the range of from 5 wt% to 50 wt% preferably in the range of from 10 wt% to 40 wt% in relation to the composition.

6. The composition according to one of the preceding claims,
wherein the composition has at least one sweetener, in particular wherein the sweetener is selected from the group consisting of acesulfame, cyclamate, glycyrrhizin, aspartame, dulcin, saccharin, rebaudiosides, preferably stevioside, naringin dihydrochalcone, monellin, neohesperidin dihydrochalcone, thaumatin, sucralose, neotame and the physiologically acceptable salts and/or derivatives thereof and/or in particular wherein the sweetener is selected from the group consisting of aspartame, acesulfame, saccharin, cyclamate, stevioside and sucralose and mixtures thereof,
in particular wherein the composition comprises the sweetener in a quantity in the range of from 0.1 wt% to 50 wt%, in particular in the range of from 0.5 wt% to 40 wt%, preferably in the range of from 1 wt% to 30 wt%, more preferably in the range of from 2 wt% to 20 wt% in relation to the composition.

7. The composition according to one of the preceding claims, wherein the composition contains at least one substance from the group of physiologically acceptable antioxidants, preferably selected from the group of (i) secondary plant substances, in particular phenolic compounds, preferably simple phenols, polyphenols, xanthones, phenylpropanoids, stilbenes and/or glycosides thereof, more preferably resveratrol and/or flavonoids; and/or isoprenoid compounds, preferably terpenes, steroids and/or the glycosides thereof, carotenoids and/or storage lipids; and/or alkaloids, in particular caffeine and/or nicotine; and/or amino acids, in particular alliin and/or canavanine; and mixtures thereof; (ii) vitamins, preferably vitamin A, C and/or E; (iii) minerals and/or trace elements, in particular compounds containing zinc, iron, copper, manganese and/or selenium; and/or in particular wherein the composition comprises the substance from the group of physiologically acceptable antioxidants in a quantity in the range of from 0.001 wt% to 5 wt%, in particular in the range of from 0.01 wt% to 4 wt%, preferably in the range of from 0.05 wt% to 3 wt%, more preferably in the range of from 0.1 wt% to 2 wt%, in relation to the composition, and/or
wherein the composition comprises at least one taste and/or flavour forming agent in particular wherein the taste and/or flavour forming agent is selected from the group of (i) extracts, in particular plant extracts, fruit extracts and tea extracts; (ii) flavourings and/or flavouring agents; (iii) plant powders, fruit powders and juice powders and (iv) mixtures thereof; and/or in particular wherein the composition comprises the taste and/or flavour forming agent in quantities in the range of from 0.1 wt% to 10 wt%, preferably in the range of from 0.25 wt% to 8 wt%, particularly preferably in the range of 0.5 wt% to 6 wt%, very particularly preferably in the range of from 1 wt% to 5 wt% in relation to the composition, and/or
wherein the composition contains further ingredients and/or excipients, selected in particular from flavourings or flavouring agents, acidifiers, preservatives, dyes, minerals, stabilisers, fillers, pressing agents, disintegrants and mixtures thereof.

8. The composition according to one of the preceding claims,
wherein the composition (b) has the substance reducing the glycaemic index (GI) of the composition applied to the sucrose and/or immobilised, in particular wherein the substance reducing the glycaemic index of the composition is applied and/or immobilised by means of granulation, agglomeration, pelletisation or coating, preferably by means of granulation, in particular wherein the granulation takes place by means of fluid-bed granulation, dry granulation or spray granulation, preferably by means of fluid-bed granulation and/or spray granulation; and/or
wherein the individual particles of the composition, in particular of the granular material and/or the powder and/or the agglomerates, are designed in the form of core-shell particles;
in particular wherein the cores of the respective particles are designed at least substantially on the basis of (a) sucrose and optionally further ingredients and/or in particular wherein the shells of the respective particles are designed at least substantially on the basis of (b) the substance reducing the glycaemic index of the composition and optionally further ingredients.

9. The composition according to one of the preceding claims,
wherein the bulk density of the composition is in the range of from 50 g/l to 800 g/l, in particular in the range of from 100 g/l to 700 g/l, preferably in the range of from 150 g/l to 600 g/l, and/or
wherein the composition has a total residual moisture content in the range of from 0.1 wt% to 7 wt%, in particular in the range of from 0.5 wt% to 6 wt%, preferably in the range of from 1 wt% to 5 wt%, in relation to the composition, and/or
wherein the composition is dispersible and/or at least partially, preferably completely, soluble in liquids, in particular water and/or milk, and/or
wherein the composition has a lower glycaemic index (GI), in particular a glycaemic index (GI) which is lower compared to sucrose, and/or wherein the composition, when applied, results in a reduced and/or delayed and/or retarded increase in blood sugar level compared to sucrose.

10. Use of the composition according to one of the preceding claims for sweetening and/or flavouring a foodstuff, preferably an industrially produced foodstuff;
in particular, wherein the sweetening and/or flavouring of the foodstuff, preferably of the industrially produced foodstuff, takes place within the production process of the foodstuff and/or during the production of the foodstuff; and/or
in particular wherein the foodstuff is a dessert and/or confectionery, in particular selected from the group of chocolate products, chocolate- or nougat-based spreads, fruit-based spreads, long-life bakery products and/or ice cream.

11. The use of the composition according to one of the preceding claims as a table-top sweetener and/or powdered sweeteners.

12. A method for producing the composition according to one of the preceding claims, wherein the method comprises the following method steps:
(i) producing a mixture which comprises (a) sucrose in a quantity in the range of from 20 wt% to 90 wt% in relation to the composition, and (b) at least one substance reducing the glycaemic index of the composition which is selected from lactose and isomaltulose in a quantity in the range of 2 wt% to 60 wt% in relation to the composition, and at least one substance reducing the glycaemic index of the composition which is selected from plant extracts based on apples, pears, grapes, tomatoes and/or carrots in a quantity in the range of from 0.5 wt% to 10 wt% in relation to the composition, wherein the plant extracts based on apples, pears, grapes, tomatoes and/or carrots contain indigestible carbohydrates, plant-based mucilages, cellulose derivatives and phenolic compounds,
and optionally containing at least one substance from the group of physiologically acceptable antioxidants, taste and/or flavour forming agents, sweeteners and optionally at least one further ingredient and/or excipient;
(ii) subsequent production of compacted materials, in particular tablets and/or pills, from the mixture produced in step i), in particular by pressing and/or making the mixture produced in step i) into tablets.

13. The method for producing the composition according to one of the preceding claims, wherein the process comprises the following method steps:
(i) producing a mixture which comprises (b) at least one substance reducing the glycaemic index of the composition which is selected from lactose and isomaltulose in a quantity in the range of from 10 wt% to 40 wt% in relation to the composition, and at least one substance reducing the glycaemic index of the composition which is selected from plant extracts based on apples, pears, grapes, tomatoes and/or carrots in a quantity in the range of from 0.5 wt% to 10 wt% in relation to the composition, wherein the plant extracts based on apples, pears, grapes, tomatoes and/or carrots contain indigestible carbohydrates, plant-based mucilages, cellulose derivatives and phenolic compounds,
and optionally at least one substance from the group of physiologically acceptable antioxidants, taste and/or flavour forming agents, sweeteners and optionally at least one further ingredient and/or excipient; subsequently
(ii) applying and/or immobilising the substance(s) provided in method step i) on a solid substrate based on sucrose in a quantity in the range of from 20 wt% to 90 wt% in relation to the composition, in particular by means of granulation, agglomeration, pelletisation or coating, preferably by means of granulation, particularly preferably by means of fluid-bed granulation, dry granulation or spray granulation.

## Revendications

1. Composition pour édulcorer et/ou aromatiser un aliment,
la composition (i) se présentant sous la forme d'un granulat et/ou d'une poudre et/ou sous la forme d'agglomérats ou (ii) sous la forme de produits compactés et
la composition présentant
(a) du saccharose en une quantité dans la plage de 20 % en poids à 90 % en poids par rapport à la composition et
(b) au moins une substance abaissant l'index glycémique de la composition (SAIG), choisie parmi le lactose et l'isomaltulose, en une quantité dans la plage de 2 % en poids à 60 % en poids par rapport à la composition et au moins une substance abaissant l'index glycémique de la composition (SAIG), choisie parmi des extraits végétaux à base de pommes, de poires, de raisins, de tomates et/ou de carottes, en une quantité dans la plage de 0,5 % en poids à 10 % en poids par rapport à la composition,
les extraits végétaux à base de pommes, de poires, de raisins, de tomates et/ou de carottes, contenant des glucides non digestibles, du mucilage d'origine végétale, des dérivés cellulosiques et des composés phénoliques et
la composition présentant un index glycémique (IG) dans la plage de 30 à 55, par rapport au glucose comme valeur de référence.

2. Composition selon la revendication 1, la composition présentant un index glycémique (IG) d'au plus 50, de manière particulièrement préférée d'au plus 40, par rapport au glucose comme valeur de référence et/ou la composition présentant un index glycémique (IG) dans la plage de 30 à 50, par rapport au glucose comme valeur de référence.

3. Composition selon la revendication 1 ou 2, la composition (a) présentant du saccharose en une quantité dans la plage de 20 % en poids à 85 % en poids, de manière particulièrement préférée dans la plage de 20 % en poids à 80 % en poids par rapport à la composition et/ou la composition présentant (a) du saccharose en une quantité d'au plus 85 % en poids, de manière particulièrement préférée d'au plus 80 % en poids, par rapport à la composition.

4. Composition selon une des revendications précédentes, la composition présentant (b) la substance abaissant l'index glycémique de la composition (SAIG) choisie parmi des extraits végétaux à base de pommes, de poires, de raisins, de tomates et/ou de carottes, en une quantité dans la plage de 0,5 % en poids à 8 % en poids, de préférence dans la plage de 0,5 % en poids à 5 % en poids, préférablement dans la plage de 0,5 % en poids à 1 % en poids par rapport à la composition.

5. Composition selon une des revendications précédentes, la composition présentant (b) la substance abaissant l'index glycémique (IG) de la composition (SAIG) choisie parmi l'isomaltulose et/ou le lactose, en une quantité dans la plage de 5 % en poids à 50 % en poids, de préférence dans la plage de 10 % en poids à 40 % en poids par rapport à la composition.

6. Composition selon une quelconque des revendications précédentes,
la composition présentant au moins un édulcorant, en particulier l'édulcorant étant choisi parmi le groupe constitué d'acésulfame, cyclamate, glycyrrhizine, aspartame, dulcine, saccharine, rébaudiosides, de préférence stéviosides, naringine-dihydrochalcone, monelline, néohespéridine-dihydrochalcone, thaumatine, sucralose, néotame et leurs sels et/ou dérivés physiologiquement acceptables et/ou en particulier l'édulcorant étant choisi parmi le groupe constitué d'aspartame, acésulfame, saccharine, cyclamate, stévioside et sucralose ainsi que leurs mélanges,
en particulier la composition présentant l'édulcorant en une quantité dans la plage de 0,1 % en poids à 50 % en poids, en particulier dans la plage de 0,5 % en poids à 40 % en poids, de préférence dans la plage de 1 % en poids à 30 % en poids, préférablement dans la plage de 2 % en poids à 20 % en poids, par rapport à la composition.

7. Composition selon une des revendications précédentes, la composition contenant au moins une substance du groupe des antioxydants physiologiquement acceptables, de préférence choisie parmi le groupe des (i) substances végétales secondaires, en particulier des composés phénoliques, de préférence des phénols simples, des polyphénols, des xanthones, des phénylpropanoïdes, des stilbènes et/ou leurs glycosides, de préférence le resvératrol et/ou des flavonoïdes ; et/ou des composés isoprénoïdes, de préférence des terpènes, des stéroïdes et/ou leurs glycosides, des caroténoïdes et/ou des lipides de stockage ; et/ou des alcaloïdes, en particulier la caféine et/ou la nicotine ; et/ou des acides aminés, en particulier l'aniline et/ou la canavanine ; et leurs mélanges ; (ii) des vitamines, de préférence la vitamine A, C et/ou E ; (iii) des substances minérales et/ou des oligoéléments, en particulier des composés à teneur en zinc, en fer, en cuivre, en manganèse et/ou en sélénium ; et/ou en particulier la composition présente la substance du groupe des antioxydants physiologiquement acceptables en une quantité dans la plage de 0,001 % en poids à 5 % en poids, en particulier dans la plage de 0,01 % en poids à 4 % en poids, de préférence dans la plage de 0,05 % en poids à 3 % en poids, préférablement dans la plage de 0,1 % en poids à 2 % en poids, par rapport à la composition et/ou
la composition présentant au moins un agent de sapidité et/ou aromatisant, en particulier l'agent de sapidité et/ou aromatisant étant choisi parmi le groupe des (i) extraits, en particulier des extraits végétaux, des extraits de fruits et des extraits de thé ; (ii) des arômes et/ou des substances aromatiques ; (iii) des poudres de végétaux, des poudres de fruits et des poudres de jus et (iv) leurs mélanges ; et/ou en particulier la composition présentant les agents de sapidité et/ou aromatisants en des quantités dans la plage de 0,1 % en poids à 10 % en poids, de préférence dans la plage de 0,25 % en poids à 8 % en poids, de manière particulièrement préférée dans la plage de 0,5 % en poids à 6 % en poids, le plus préférablement dans la plage de 1 % en poids à 5 % en poids, par rapport à la composition et/ou
la composition contenant en outre des substances et/ou des excipients, choisis en particulier parmi des arômes ou des substances aromatiques, des agents acidifiants, des agents de conservation, des colorants, des substances minérales, des stabilisants, des agents de charge, des agents de compression, des agents désintégrants et leurs mélanges.

8. Composition selon une quelconque des revendications précédentes,
la composition présentant (b) la substance abaissant l'index glycémique (IG) de la composition (SAIG) déposée et/ou immobilisée sur le saccharose, en particulier le dépôt et/ou l'immobilisation (b) de la substance abaissant l'index glycémique de la composition (SAIG) s'effectuant par granulation, agglomération, pelletisation ou enrobage, de préférence par granulation, en particulier la granulation étant réalisée par granulation en lit fluidisé, granulation à sec ou granulation par pulvérisation, de préférence par granulation en lit fluidisé et/ou granulation par pulvérisation ; et/ou les particules individuelles de la composition, en particulier du granulat et/ou de la poudre et/ou de l'agglomérat sont constituées sous la forme de particules noyau/enveloppe ;
en particulier le noyau de chaque particule étant au moins essentiellement constitué à base de (a) saccharose et le cas échéant d'autres substances et/ou en particulier l'enveloppe de chaque particule étant au moins essentiellement constituée à base (b) de la substance abaissant l'index glycémique de la composition (SAIG) et le cas échéant d'autres substances.

9. Composition selon une quelconque des revendications précédentes,
la masse volumique apparente de la composition se situant dans la plage de 50 g/l à 800 g/l, en particulier dans la plage de 100 g/l à 700 g/l, de préférence dans la plage de 150 g/l à 600 g/l et/ou
la composition présentant une humidité résiduelle totale dans la plage de 0,1 % en poids à 7 % en poids, en particulier dans la plage de 0,5 % en poids à 6 % en poids, de préférence dans la plage de 1 % en poids à 5 % en poids, par rapport à la composition ; et/ou
la composition étant dispersible et/ou au moins partiellement, de préférence totalement soluble dans des liquides, en particulier dans de l'eau et/ou du lait et/ou
la composition présentant un index glycémique (IG) abaissé, en particulier un index glycémique (IG) abaissé par rapport au saccharose et/ou la composition permettant par son utilisation une élévation de la glycémie abaissée et/ou ralentie et/ou retardée par rapport au saccharose.

10. Utilisation d'une composition selon une des revendications précédentes pour édulcorer et/ou aromatiser un aliment, de préférence un aliment produit industriellement ;
en particulier dans laquelle l'édulcoration et/ou l'aromatisation de l'aliment, de préférence de l'aliment produit industriellement, s'effectue dans le cadre du procédé de fabrication de l'aliment et/ou lors de la fabrication de l'aliment ; et/ou
en particulier l'aliment étant un dessert et/ou une confiserie, en particulier choisi parmi le groupe des produits à base de chocolat, des pâtes à tartiner à base de chocolat ou de nougat, des pâtes à tartiner à base de fruits, des biscuits et/ou une crème glacée.

11. Utilisation d'une composition selon une des revendications précédentes comme édulcorant de table et/ou de saupoudrage.

12. Procédé de fabrication d'une composition selon une quelconque des revendications précédentes, le procédé comprenant les étapes de procédé suivantes :
(i) fabrication d'un mélange, qui contient (a) du saccharose en une quantité dans la plage de 20 % en poids à 90 % en poids par rapport à la composition et (b) au moins une substance abaissant l'index glycémique de la composition (SAIG), choisie parmi le lactose et l'isomaltulose en une quantité dans la plage de 2 % en poids à 60 % en poids par rapport à la composition et au moins une substance abaissant l'index glycémique de la composition (SAIG), choisie parmi des extraits végétaux à base de pommes, de poires, de raisins, de tomates et/ou de carottes, en une quantité dans la plage de 0,5 % en poids à 10 % en poids, par rapport à la composition, dans laquelle les extraits végétaux à base de pommes, de poires, de raisins, de tomates et/ou de carottes contiennent des glucides non digestibles, des mucilages d'origine végétale, des dérivés cellulosiques et des composés phénoliques,
ainsi que le cas échéant au moins une substance du groupe des antioxydants, des agents de sapidité et/ou aromatisants, des édulcorants physiologiquement compatibles ainsi que le cas échéant au moins une substance et/ou un excipient supplémentaire ;
(ii) fabrication ultérieure de produits compacts, en particulier des comprimés et/ou des pilules à partir du mélange fabriqué à l'étape i), en particulier par pressage et/ou transformation en comprimés du mélange fabriqué à l'étape i).

13. Procédé de fabrication d'une composition selon une quelconque des revendications précédentes, le procédé comprenant les étapes de procédé suivantes :
(i) fabrication d'un mélange qui contient (b) au moins une substance abaissant l'index glycémique de la composition (SAIG), choisie parmi le lactose et l'Isomaltulose et en une quantité dans la plage de 10 % en poids à 40 % en poids par rapport à la composition et au moins une substance abaissant l'index glycémique de la composition (SAIG) choisie parmi des extraits végétaux à base de pommes, de poires, de raisins, de tomates et/ou de carottes, en une quantité dans la plage de 0,5 % en poids à 10 % en poids par rapport à la composition, dans laquelle les extraits végétaux à base de pommes, de poires, de raisins, de tomates et/ou de carottes contiennent des glucides non digestibles, des mucilages d'origine végétale, des dérivés cellulosiques et des composés phénoliques,
ainsi que le cas échéant au moins une substance du groupe des antioxydants, des agents de sapidité et/ou aromatisants, des édulcorants physiologiquement compatibles ainsi que le cas échéant au moins une substance et/ou un excipient supplémentaire ; puis
(ii) dépôt et/ou immobilisation de la ou des substances préparées à l'étape de procédé i) sur un support solide à base de saccharose en une quantité dans la plage de 20 % en poids à 90 % en poids par rapport à la composition, en particulier par granulation, agglomération, pelletisation ou enrobage, de préférence par granulation, de manière particulièrement préférée par granulation en lit fluidisé, granulation à sec ou granulation par pulvérisation.
